# EUROPEAN PATENT APPLICATION

(11) **EP 4 354 917 A1**
(43) Date of publication of application: **17.04.2024**
(21) Application number: 22845209.0
(22) Date of filing: 13.07.2022
(51) Int. Cl.: H04W 4/80

(54) **DATA PROCESSING METHOD AND ELECTRONIC DEVICE**

(30) Priority: 20.07.2021 CN 202110819701
(71) Applicant: Huawei Technologies Co., Ltd., Shenzhen, Guangdong 518129 (CN)
(72) Inventor: ZHOU, Ming, Shenzhen, Guangdong 518129 (CN); XIA, Jikang, Shenzhen, Guangdong 518129 (CN); TIAN, Kaiyun, Shenzhen, Guangdong 518129 (CN)
(74) Representative: Huawei European IPR
(86) International application number: PCT/CN2022/105491
(87) International publication number: WO 2023/001044

(57) **Abstract**

Embodiments of this application provide a data processing method and an electronic device. The method includes: In a process in which a first electronic device performs data exchange with a second electronic device through a wireless connection, the first electronic device may detect a status of the first electronic device, where the status of the first electronic device includes a moving state or a static state. The first electronic device may adjust, based on the status of the first electronic device, a configuration parameter of the wireless connection and/or an encoding and decoding policy that are/is used when the first electronic device interacts with the second electronic device. Therefore, a method for adaptively adjusting a configuration parameter for data exchange based on a motion status of an electronic device is provided, to meet requirements of different interaction scenarios.

## Description

This application claims priority to Chinese Patent Application No. 202110819701.8, filed with the China National Intellectual Property Administration on July 20, 2021 and entitled "DATA PROCESSING METHOD AND ELECTRONIC DEVICE", which is incorporated herein by reference in its entirety.

### TECHNICAL FIELD

Embodiments of this application relate to the field of terminal devices, and in particular, to a data processing method and an electronic device.

### BACKGROUND

With development of projection technologies, application scenarios of the projection technologies are increasing. For example, a user may use a mobile phone to perform projection on a tablet or an in-vehicle screen when walking. Therefore, in a projection scenario, a transmit end (for example, a mobile phone) and a receive end (for example, a tablet) of projection may be in a moving state. Due to movement of the projection devices, a radio channel condition between the projection devices rapidly varies with time, causing a delay and jitter in projection data transmission. As a result, a frame loss and frame freezing occur in a projection image.

### SUMMARY

To resolve the foregoing technical problem, this application provides a data processing method and an electronic device. In the method, in a process in which the electronic device performs data exchange with another electronic device through a wireless connection, the electronic device may adjust, based on a motion status of the electronic device, a configuration parameter during data exchange, so as to adaptively adjust the configuration parameter for different motion statuses.

According to a first aspect, an embodiment of this application provides a data processing method. The method includes: A first electronic device establishes a wireless connection with a second electronic device, and performs data exchange with the second electronic device through the wireless connection; the first electronic device detects a status of the first electronic device, where the status of the first electronic device is a moving state or a static state; the first electronic device determines a target configuration parameter based on the status of the first electronic device, where the target configuration parameter includes a configuration parameter of the wireless connection between the first electronic device and the second electronic device, and/or an encoding and decoding policy of the first electronic device; and the first electronic device performs data exchange with the second electronic device based on the target configuration parameter. In this way, the first electronic device may adaptively adjust to a corresponding target configuration parameter based on a motion status of the first electronic device, and may configure a corresponding configuration parameter based on different motion statuses. For example, the moving state corresponds to a configuration parameter of the moving state, and a configuration parameter of the static state is configured for the static state. In this way, different projection effects are implemented based on different motion statuses.

For example, the first electronic device may determine the motion status of the first electronic device based on a parameter detected by an IMU module.

For example, the first electronic device may determine the motion status of the first electronic device based on the IMU module and a communication status of the wireless connection.

For example, the wireless connection between the first electronic device and the second electronic device may be a Wi-Fi connection.

According to the first aspect, that a first electronic device establishes a wireless connection with a second electronic device, and performs data exchange with the second electronic device through the wireless connection includes: The first electronic device sends a connection request message to the second electronic device in response to a received first user operation; the first electronic device establishes the wireless connection with the second electronic device in response to a received response message sent by the second electronic device; and the first electronic device sends a data packet including an image frame to the second electronic device through the wireless connection. In this way, in a process in which the first electronic device serves as a transmit end and sends the data packet including the image frame to the second electronic device, the first electronic device may adjust, based on the motion status of the first electronic device, the configuration parameter of the transmit end, to improve stability of image frame transmission.

According to the first aspect or any one of the foregoing implementations of the first aspect, if the status of the first electronic device is the moving state, the configuration parameter of the wireless connection includes at least one of the following: A quantity of retransmissions of the data packet is N, and a multiple-input multiple-output MIMO mode is a diversity mode, where N is an integer greater than 0. In this way, in a projection process of the first electronic device, if the first electronic device is in the moving state, the first electronic device may increase the quantity of retransmissions of the data packet and adjust the MIMO mode to the diversity mode, to improve robustness of a wireless transmission channel, and reduce occurrence of problems such as an image frame loss and frame freezing.

According to the first aspect or any one of the foregoing implementations of the first aspect, if the status of the first electronic device is the static state, the configuration parameter of the wireless connection includes at least one of the following: A quantity of retransmissions of the data packet is M, and the MIMO mode is a multiplexing mode, where M is an integer greater than 0 and less than N. In this way, in a projection process, if the first electronic device is in the static state, the first electronic device may adjust the MIMO mode to the multiplexing mode by reducing the quantity of retransmissions of the data packet, thereby improving data transmission performance and providing a better low-delay projection effect.

According to the first aspect or any one of the foregoing implementations of the first aspect, if the status of the first electronic device is the moving state, the encoding and decoding policy of the first electronic device includes at least one of the following: A bit rate of the image frame is A1; a resolution of the image frame is B 1; and adjusting an encoding dependency relationship of the image frame. In this way, in a projection process of the first electronic device, when the first electronic device is in the moving state, the first electronic device may decrease the bit rate and resolution of the image frame, to reduce an amount of data during data transmission, so as to reduce wireless bandwidth usage. In addition, the first electronic device may further adjust the encoding dependency relationship of the image frame by using a feedback mechanism, to provide a better low-latency projection effect.

According to the first aspect or any one of the foregoing implementations of the first aspect, if the status of the first electronic device is the static state, the encoding and decoding policy of the first electronic device includes at least one of the following: The bit rate of the image frame is A2; the resolution of the image frame is B2; and adjusting the encoding dependency relationship of the image frame, where A2 is greater than A1, and B2 is greater than B 1. In this way, in a projection process of the first electronic device, when the first electronic device is in the static state, the first electronic device may increase the bit rate and resolution of the image frame, to improve display image quality at a receive end. In addition, the first electronic device may further adjust, by using a feedback mechanism, the encoding dependency relationship of the image frame when an image frame is lost, to reduce impact of the image frame loss on decoding at the receive end, thereby providing a better low-latency projection effect.

According to the first aspect or any one of the foregoing implementations of the first aspect, that a first electronic device establishes a wireless connection with a second electronic device, and performs data exchange with the second electronic device through the wireless connection includes: The first electronic device sends a response message to the second electronic device in response to a received connection request message sent by the second electronic device; the first electronic device establishes the wireless connection with the second electronic device; and the first electronic device receives, through the wireless connection, a data packet that includes an image frame and that is sent by the second electronic device. In this way, in a process in which the first electronic device serves as a receive end and receives the data packet that includes the image frame and that is sent by the second electronic device, the first electronic device may adjust, based on the motion status of the first electronic device, the configuration parameter of the transmit end, to improve stability of displaying the image frame.

According to the first aspect or any one of the foregoing implementations of the first aspect, if the status of the first electronic device is the moving state, the configuration parameter of the wireless connection includes: A MIMO mode is a diversity mode. In this way, in a projection process of the first electronic device, when the first electronic device is in the moving state, the first electronic device may adjust the MIMO mode to the diversity mode, to improve a success rate of receiving the image frame.

According to the first aspect or any one of the foregoing implementations of the first aspect, if the status of the first electronic device is the static state, the wireless connection configuration parameter includes: A MIMO mode is a multiplexing mode. In this way, in a projection process of the first electronic device, when the first electronic device is in the static state, the first electronic device may adjust the MIMO mode to the multiplexing mode, to improve efficiency of receiving the image frame.

According to the first aspect or any one of the foregoing implementations of the first aspect, if the status of the first electronic device is the moving state, the encoding and decoding policy of the first electronic device includes: setting a size of an image buffer to C1. In this way, in a projection process of the first electronic device, when the first electronic device is in the moving state, the first electronic device may increase the size of the image buffer, to reduce a frame loss caused by unstable arrival time of frame transmission.

According to the first aspect or any one of the foregoing implementations of the first aspect, if the status of the first electronic device is the static state, the encoding and decoding policy of the first electronic device includes: setting the size of the image buffer to C2, where C2 is less than C1. In this way, in a projection process of the first electronic device, when the first electronic device is in the static state, the first electronic device may send the image frame for display in a timely manner by reducing the size of the image buffer, so as to reduce a projection display delay.

According to the first aspect or any one of the foregoing implementations of the first aspect, the method further includes: The first electronic device sends the status of the first electronic device to the second electronic device. In this way, the first electronic device and the second electronic device may notify a peer end of statuses of the first electronic device and the second electronic device, so that the peer end can correspondingly adjust a configuration parameter.

According to the first aspect or any one of the foregoing implementations of the first aspect, the method further includes: The first electronic device receives a status of the second electronic device that is sent by the second electronic device, where the status of the second electronic device is a moving state or a static state; and if the status of the second electronic device is the moving state, the first electronic device adjusts a configuration parameter of the first electronic device to a target configuration parameter corresponding to the moving state. In this way, when either end of the first electronic device or the second electronic device is in the moving state, the other end also adjusts the configuration parameter to the configuration parameter corresponding to the moving state.

According to a second aspect, an embodiment of this application provides a first electronic device. The electronic device includes a memory and a processor, where the memory is coupled to the processor; and the memory stores program instructions, and when the program instructions are executed by the processor, the first electronic device performs the following steps: establishing a wireless connection with a second electronic device, and performing data exchange with the second electronic device through the wireless connection; detecting a status of the first electronic device, where the status of the first electronic device is a moving state or a static state; determining a target configuration parameter based on the status of the first electronic device, where the target configuration parameter includes a configuration parameter of the wireless connection between the first electronic device and the second electronic device, and/or an encoding and decoding policy of the first electronic device; and performing data exchange with the second electronic device based on the target configuration parameter.

According to the second aspect, when the program instructions are executed by the processor, the first electronic device is enabled to perform the following steps: sending a connection request message to the second electronic device in response to a received first user operation; establishing the wireless connection with the second electronic device in response to a received response message sent by the second electronic device; and sending a data packet including an image frame to the second electronic device through the wireless connection.

According to the second aspect or any one of the foregoing implementations of the second aspect, if the status of the first electronic device is the moving state, the wireless connection configuration parameter includes at least one of the following: A quantity of retransmissions of the data packet is N, and a multiple-input multiple-output MIMO mode is a diversity mode, where N is an integer greater than 0.

According to the second aspect or any one of the foregoing implementations of the second aspect, if the status of the first electronic device is the static state, the configuration parameter of the wireless connection includes at least one of the following: The quantity of retransmissions of the data packet is M, and the MIMO mode is a multiplexing mode, where M is an integer greater than 0 and less than N.

According to the second aspect or any one of the foregoing implementations of the second aspect, if the status of the first electronic device is the moving state, the encoding and decoding policy of the first electronic device includes at least one of the following: A bit rate of the image frame is A1; a resolution of the image frame is B1; and adjusting an encoding dependency relationship of the image frame.

According to the second aspect or any one of the foregoing implementations of the second aspect, if the status of the first electronic device is the static state, the encoding and decoding policy of the first electronic device includes at least one of the following: The bit rate of the image frame is A2; the resolution of the image frame is B2; and adjusting the encoding dependency relationship of the image frame, where A2 is greater than A1, and B2 is greater than B1.

According to the second aspect or any one of the foregoing implementations of the second aspect, when the program instructions are executed by the processor, the first electronic device is enabled to perform the following steps: sending a response message to the second electronic device in response to a received connection request message sent by the second electronic device; establishing the wireless connection with the second electronic device; and receiving, through the wireless connection, a data packet that includes an image frame and that is sent by the second electronic device.

According to the second aspect or any one of the foregoing implementations of the second aspect, if the status of the first electronic device is the moving state, the wireless connection configuration parameter includes: A MIMO mode is the diversity mode.

According to the second aspect or any one of the foregoing implementations of the second aspect, if the status of the first electronic device is the static state, the configuration parameter of the wireless connection includes: A MIMO mode is a multiplexing mode.

According to the second aspect or any one of the foregoing implementations of the second aspect, if the status of the first electronic device is the moving state, the encoding and decoding policy of the first electronic device includes: setting a size of an image buffer to C1.

According to the second aspect or any one of the foregoing implementations of the second aspect, if the status of the first electronic device is the static state, the encoding and decoding policy of the first electronic device includes: setting the size of the image buffer to C2, where C2 is less than C1.

According to the second aspect or any one of the foregoing implementations of the second aspect, when the program instructions are executed by the processor, the first electronic device is enabled to perform the following step: sending the status of the first electronic device to the second electronic device.

According to the second aspect or any one of the foregoing implementations of the second aspect, when the program instructions are executed by the processor, the first electronic device is enabled to perform the following steps: receiving a status of the second electronic device that is sent by the second electronic device, where the status of the second electronic device is a moving state or a static state; and if the status of the second electronic device is the moving state, adjusting a configuration parameter of the first electronic device to a target configuration parameter corresponding to the moving state.

The second aspect and any one of the implementations of the second aspect respectively correspond to the first aspect and any one of the implementations of the first aspect. For technical effects corresponding to the second aspect and any one of the implementations of the second aspect, refer to the technical effects corresponding to the first aspect and any one of the implementations of the first aspect. Details are not described herein again.

According to a third aspect, an embodiment of this application provides a computer-readable medium, configured to store a computer program. The computer program includes instructions for performing the method according to the second aspect or any one of the possible implementations of the second aspect.

The third aspect and any implementation of the third aspect respectively correspond to the first aspect and any implementation of the first aspect. For technical effects corresponding to the third aspect and any one of the implementations of the third aspect, refer to the technical effects corresponding to the first aspect and any one of the implementations of the first aspect. Details are not described herein again.

According to a fourth aspect, an embodiment of this application provides a computer program. The computer program includes instructions for performing the method according to the second aspect or any one of the possible implementations of the second aspect.

The fourth aspect and any one of the implementations of the fourth aspect respectively correspond to the first aspect and any one of the implementations of the first aspect. For technical effects corresponding to the fourth aspect and any one of the implementations of the fourth aspect, refer to the technical effects corresponding to the first aspect and any one of the implementations of the first aspect. Details are not described herein again.

According to a fifth aspect, an embodiment of this application provides a chip. The chip includes a processing circuit and a transceiver pin. The transceiver pin and the processing circuit communicate with each other through an internal connection path. The processing circuit performs the method according to the first aspect or any one of the possible implementations of the first aspect, to control a receive pin to receive a signal and a transmit pin to send a signal.

According to a sixth aspect, an embodiment of this application provides a communication system, including the first electronic device and the second electronic device according to the first aspect or any one of the implementations of the first aspect.

### BRIEF DESCRIPTION OF DRAWINGS

FIG. 1a is a schematic diagram of an example of an application scenario;
FIG. 1b-1 and FIG. 1b-2 are a schematic diagram of an example of a multi-screen collaboration scenario;
FIG. 2 is a schematic diagram of an example of a hardware structure of an electronic device;
FIG. 3 is a schematic diagram of an example of a connection between a mobile phone and a tablet;
FIG. 4 is a schematic diagram of an example of a connection between a mobile phone and a tablet;
FIG. 5(1) to FIG. 5(4) are schematic diagrams of examples of user interfaces;
FIG. 6 is a schematic flowchart of an example of data exchange between a mobile phone and a tablet;
FIG. 7 is a schematic diagram of an example of a GOP;
FIG. 8 is a schematic diagram of an example of a format of a data packet;
FIG. 9 is a schematic diagram of data transmission between a mobile phone and a tablet;
FIG. 10 is a schematic diagram of an example of a software structure of an electronic device;
FIG. 11 is a schematic diagram of an example of module interaction;
FIG. 12 is a schematic diagram of an example of a configuration process for a transmit end;
FIG. 13 is a schematic diagram of an example of communication in a diversity mode;
FIG. 14a is a schematic diagram of an example of feeding back frame loss statistics;
FIG. 14b is a schematic diagram of an example of adjusting an encoding policy;
FIG. 15a is a schematic diagram of another example of feeding back frame loss statistics;
FIG. 15b is a schematic diagram of an example of data packet transmission;
FIG. 16 is a schematic diagram of an example of a configuration process for a transmit end;
FIG. 17 is a schematic diagram of an example of communication in a multiplexing mode;
FIG. 18 is a schematic diagram of an example of a configuration process for a receive end;
FIG. 19 is a schematic flowchart of an example of module interaction;
FIG. 20 is a schematic diagram of an example of a configuration process for a receive end;
FIG. 21a and FIG. 21b are a schematic diagram of an example of interaction between a mobile phone and a tablet; and
FIG. 22 is a schematic diagram of an example of a structure of an apparatus.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects but do not indicate a particular order of the objects. For example, a first target object, and a second target object are used to distinguish between different target objects, but are not used to describe a particular order of the target objects.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example" or the like is intended to present a relative concept in a specific manner.

In the description of embodiments of this application, unless otherwise stated, "a plurality of" means two or more than two. For example, a plurality of processing units means two or more processing units; and a plurality of systems means two or more systems.

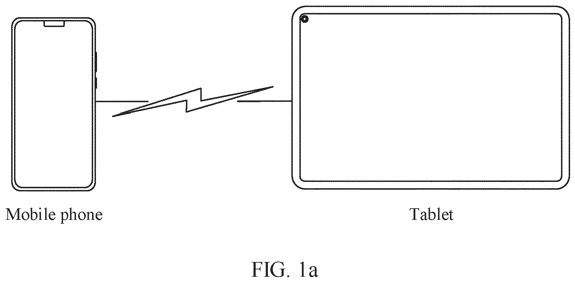

Before the technical solutions in embodiments of this application are described, an application scenario in embodiments of this application is first described with reference to the accompanying drawings. FIG. 1a is a schematic diagram of an example of an application scenario. The application scenario includes a mobile phone and a tablet. It should be noted that a quantity of electronic devices (the mobile phone and the tablet) in FIG. 1a is merely an example. This is not limited in this application.

In descriptions of this embodiment of this application, a projection scenario between the mobile phone and the tablet is used as an example for description. For example, in the projection scenario, a communication connection between the mobile phone and the tablet may be a P2P (peer-to-peer, peer-to-peer) connection. In another embodiment, the technical solutions in this embodiment of this application may be further applied to another application scenario between the mobile phone and the tablet, for example, may be Huawei Share or a multi-screen collaboration scenario. This is not limited in this application. Correspondingly, for different scenarios, protocols based on which the connection between the mobile phone and the tablet is based may also be different. As described above, in this embodiment of this application, the communication connection between the mobile phone and the tablet is maintained by using a P2P protocol. In another embodiment, the communication connection between the mobile phone and the tablet may alternatively be maintained based on another wireless communication protocol. This is not limited in this application. For example, in the projection scenario based on the P2P connection, the mobile phone and the tablet may also be referred to as a transmit end and a receive end in the projection scenario, or may be referred to as P2P devices.

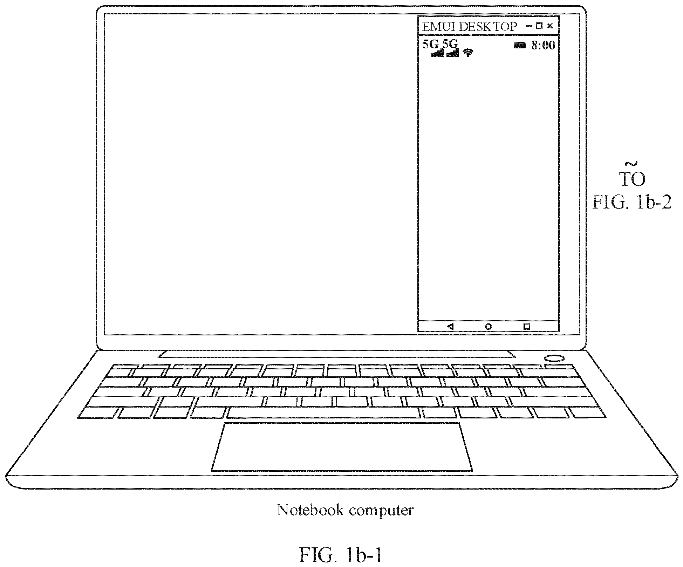

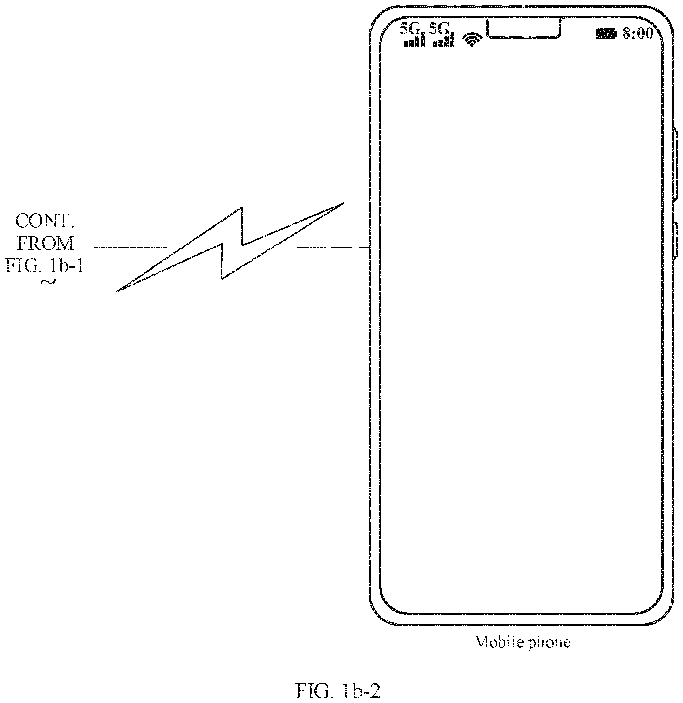

For example, FIG. 1b-1 and FIG. 1b-2 are a schematic diagram of an example of a multi-screen collaboration scenario. Refer to FIG. 1b-1 and FIG. 1b-2. For example, a mobile phone and a notebook computer perform multi-screen collaboration, and a communication connection between the mobile phone and the notebook computer may be maintained based on a wireless communication protocol, for example, may be a P2P protocol. The mobile phone may be used as a transmit end to send an image frame to the notebook computer, and an image in the image frame corresponds to an interface currently displayed by the mobile phone. In this way, an image corresponding to the current interface of the mobile phone may be displayed in a multi-screen collaboration interface on the notebook computer.

It should be noted that the scenarios shown in FIG. 1a and FIG. 1b-1 and FIG. 1b-2 are merely examples. In another embodiment, the technical solutions in this embodiment of this application may be further applied to a projection scenario, a sharing scenario, a multi-screen collaboration scenario, or the like between an electronic device, for example, a mobile phone, a tablet, a notebook computer, or a wearable device and an electronic device, for example, a television or an in-vehicle device.

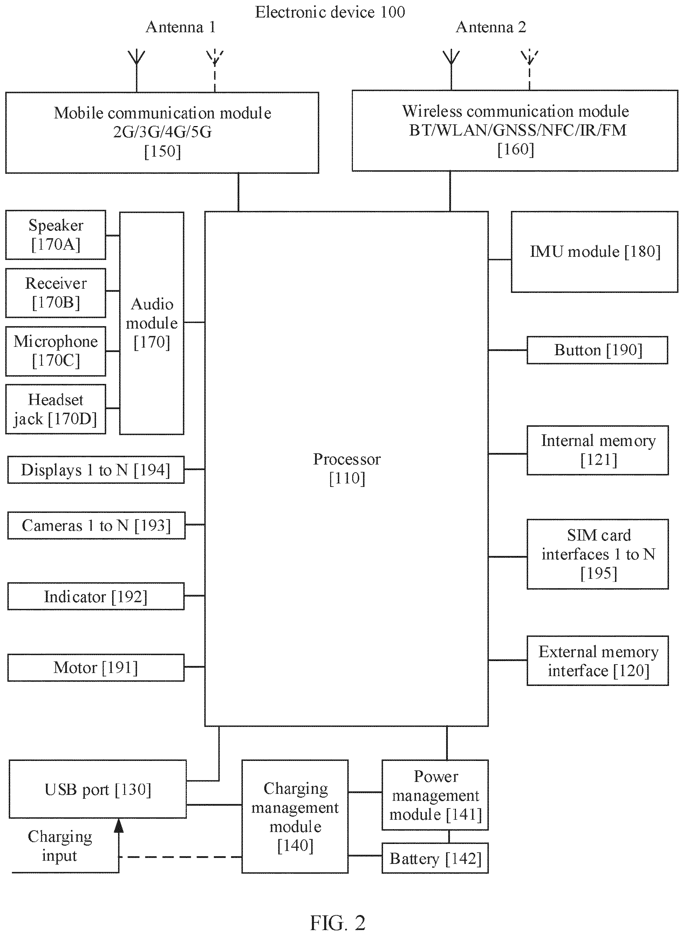

FIG. 2 is a schematic diagram of a structure of an electronic device 100. It should be understood that the electronic device 100 shown in FIG. 2 is merely an example of the electronic device, and the electronic device 100 may have more or fewer components than those shown in the figure, or may combine two or more components, or may have different component configurations. Various components shown in FIG. 2 may be implemented in hardware including one or more signal processing and/or application-specific integrated circuits, software, or a combination of hardware and software. It should be noted that the electronic device in FIG. 2 may be the mobile phone or the tablet computer in FIG. 1a, or may be the mobile phone or the notebook computer in FIG. 1b-1 and FIG. 1b-2, or certainly may be an electronic device in another application scenario. This is not limited in this application.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, an IMU (Inertial measurement unit, inertial measurement unit) module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes a serial data line (serial data line, SDA) and a serial clock line (serial clock line, SCL). In some embodiments, the processor 110 may include a plurality of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used for audio communication, and samples, quantizes, and encodes an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral device, for example, the display 194 and the camera 193. The MIPI interface includes a camera serial interface (camera serial interface, CSI), a display serial interface (display serial interface, DSI), and the like. In some embodiments, the processor 110 communicates with the camera 193 through the CSI, to implement an image shooting function of the electronic device 100. The processor 110 communicates with the display 194 through the DSI, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, and the like. The GPIO interface may be further configured as an I2C interface, an I2S interface, a UART interface, an MIPI interface, or the like.

The USB port 130 is a port that meets a USB standard specification, and may be specifically a mini USB port, a micro USB port, a USB type-C port, or the like. The USB port 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device, for example, an AR device.

It may be understood that an interface connection relationship between the modules shown in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive charging input from the charger. The charger may be a wireless charger or a wired charger. In some embodiments of wired charging, the charging management module 140 may receive charging input of the wired charger through the USB port 130. In some embodiments of wireless charging, the charging management module 140 may receive wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like. The power management module 141 may be further configured to monitor a parameter, for example, a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then the demodulator transfers the low-frequency baseband signal obtained through demodulation to the baseband processor for processing. After being processed by the baseband processor, the low-frequency baseband signal is transmitted to the application processor. The application processor outputs a sound signal by using an audio device (which is not limited to the speaker 170A, the receiver 170B, or the like), or displays an image or a video by using the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution that is applied to the electronic device 100 and includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processor module. The wireless communication module 160 receives an electromagnetic wave through the antenna 2, performs frequency modulation and filtering processing on the electromagnetic wave signal, and sends the processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement an image shooting function through the camera 193, the ISP, the video codec, the GPU, the display 194, the application processor and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize a parameter, for example, exposure and a color temperature of an image shooting scenario. In some embodiments, the ISP may be disposed in the camera 193.

The camera 193 is configured to capture a static image or a video. An optical image of an object is generated through the lens, and is projected to the photosensitive element. The photosensitive element may be a charge coupled device (charge coupled device, CCD) or a complementary metal-oxide-semiconductor (complementary metal-oxide-semiconductor, CMOS) optoelectronic transistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in a format, for example, RGB or YUV. In some embodiments, the electronic device 100 may include one or N cameras 193, where N is a positive integer greater than 1.

The digital signal processor is configured to process a digital signal, and may process another digital signal in addition to a digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transmission mode between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be used to connect to an external storage card, for example, a micro SD card, to extend a storage capability of the electronic device 100. The external memory card communicates with the processor 110 through the external memory interface 120, to implement a data storage function. For example, a music file or a video file is stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound playing function or an image playing function), and the like. The data storage area may store data (such as audio data and an address book) created during use of the electronic device 100, and the like. In addition, the internal memory 121 may include a high-speed random access memory, or may include a non-volatile memory, for example, at least one magnetic disk storage device, a flash memory, or a universal flash storage (universal flash storage, UFS).

The electronic device 100 may implement an audio function by using the audio module 170, the speaker 170A, the receiver 170B, the microphone 170C, the headset jack 170D, the application processor, and the like, for example, music playing and recording.

The audio module 170 is configured to convert digital audio information into an analog audio signal for output, and is further configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB port 130, or may be a 3.5 mm open mobile terminal platform (open mobile terminal platform, OMTP) standard interface or cellular telecommunications industry association of the USA (cellular telecommunications industry association of the USA, CTIA) standard interface.

The IMU module 180 is configured to obtain IMU pose information of the electronic device. For example, the IMU module 180 may include an acceleration sensor and a gyroscope sensor. The gyroscope sensor may be configured to determine a moving posture of the electronic device 100. In some embodiments, an angular velocity of the electronic device 100 around three axes (namely, axes x, y, and z) may be determined through the gyroscope sensor. The acceleration sensor may detect magnitude of acceleration of the electronic device 100 in the three axes (namely, the axes x, y, and z). When the electronic device 100 is static, a magnitude and a direction of gravity may be detected. It should be noted that in this embodiment of this application, the IMU module integrated in the electronic device may be a 6-axis IMU module. In another embodiment, the electronic device may further integrate a 9-axis IMU module. The 9-axis IMU module includes a gyroscope sensor (which may obtain angular velocities on the x, y, and z axes), an acceleration sensor (which may obtain acceleration on the x, y, and z axes), and a magnetometer (which may obtain directions on the x, y, and z axes). This is not limited in this application.

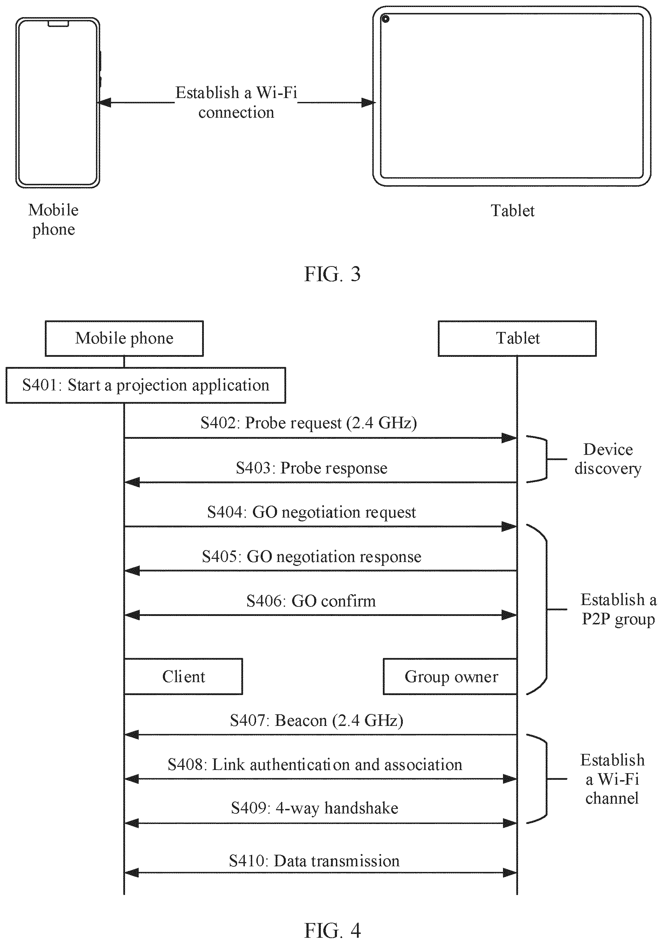

With reference to the application scenario shown in FIG. 1a, FIG. 3 is an example of a schematic diagram of a connection between the mobile phone and the tablet. Refer to FIG. 3. For example, a Wi-Fi connection is established between the mobile phone and the tablet, to perform data exchange through the Wi-Fi connection. As described above, in this embodiment of this application, an example in which the Wi-Fi connection between the mobile phone and the tablet is maintained based on the P2P protocol is used for description. For example, a process of establishing the P2P connection between the mobile phone and the tablet may be divided into three parts.

Part 1: Device discovery. Specifically, in a device discovery phase, the mobile phone and the tablet may discover, through searching, another surrounding device supporting P2P. For example, the mobile phone may find, through searching, that a tablet supporting P2P exists around. Similarly, the tablet can also find, through searching, that a mobile phone supporting P2P exists around.

Part 2: A group between the mobile phone and the tablet is established. Specifically, a mobile phone is used as an example. After finding that a tablet supporting P2P exists around the mobile phone, the mobile phone may establish a P2P group with the tablet, and negotiate about which device is a GO (Group Owner, group owner) and which device is a client (member, also referred to as a group member).

For example, a function of the GO is similar to that of an access point AP (Access Point) in a basic service set BSS (Basic Service Set), and may also be referred to as a base station. A function of the client is similar to that of a station (Station, STA) in the BSS. The station is a terminal device (electronic device) that has a Wi-Fi communication function and is connected to a wireless network, for example, a mobile phone, a tablet computer, or a notebook computer. The station may support a plurality of wireless local area network (wireless local area network, WLAN) standards of the 802.11 family such as 802.11be, 802.11ax, 802.11ac, 802.11n, 802.11g, 802.11b, and 802.11a.

Specifically, the access point may be a terminal device (for example, a mobile phone) or a network device (for example, a router) with a Wi-Fi chip. For example, the access point may be a device that supports the 802.11be standard. The access point may alternatively be a device that supports a plurality of WLAN standards of the 802.11 family, such as 802.11be, 802.11ax, 802.11ac, 802.1 In, 802.11g, 802.11b, and 802.11a.

It should be noted that, the electronic device in this embodiment of this application is usually a terminal product that supports 802.11 series standards. In an evolution process from 802.11a to 802.11g, 802.11n, and 802.11ac to 802.11ax, available frequency bands include 2.4 gigahertz (GHz) and 5 GHz. With increasingly more available frequency bands, a maximum channel bandwidth supported by 802.11 is expanded from 20 megahertz (MHz) to 40 MHz and then to 160 MHz. In 2017, the Federal Communications Commission (Federal Communications Commission, FCC) opened up a new free frequency band of 6 GHz (5925 MHz to 7125 MHz). Drafters of the 802.11ax standard expanded an operating range of an 802.11ax device from 2.4 GHz and 5 GHz to 2.4 GHz, 5 GHz and 6 GHz in the 802.11ax project authorization requests (project authorization requests, PAR). In this embodiment of this application, only an example in which each electronic device works at 2.4 GHz and 5 GHz is used for description. This embodiment of this application is also applicable to a projection scenario between devices that support a next-generation communication protocol (for example, 802.11be).

Part 3: AP2P connection channel between the mobile phone and the tablet is established. Specifically, after the mobile phone and the tablet determine the GO and the client, the GO (for example, the tablet) may initiate a P2P connection channel establishment process to the client (for example, the mobile phone). After the tablet and the mobile phone successfully establish the P2P connection channel, data exchange may be performed on the channel. It should be noted that the GO may be a transmit end (for example, the mobile phone) in the projection scenario, or may be a receive end (for example, the tablet) in the projection scenario. This is not limited in this application.

With reference to a schematic flowchart shown in FIG. 4, the following briefly describes the P2P connection establishment process between the mobile phone and the tablet. Refer to FIG. 4. The process specifically includes the following steps.

S401: The mobile phone starts a projection application.

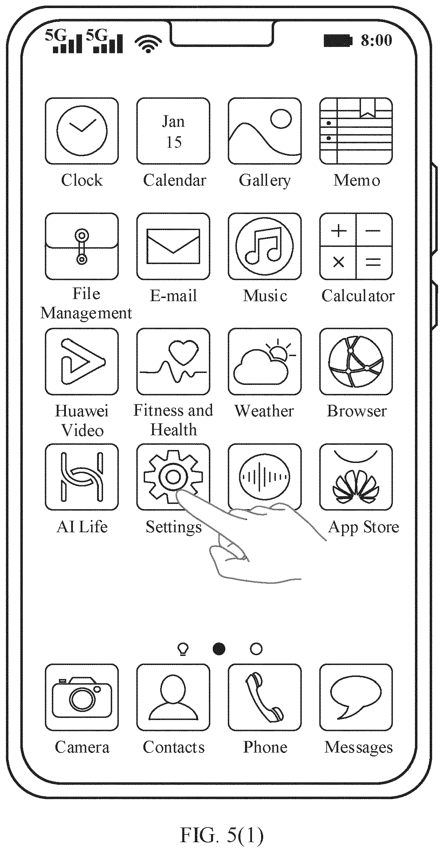

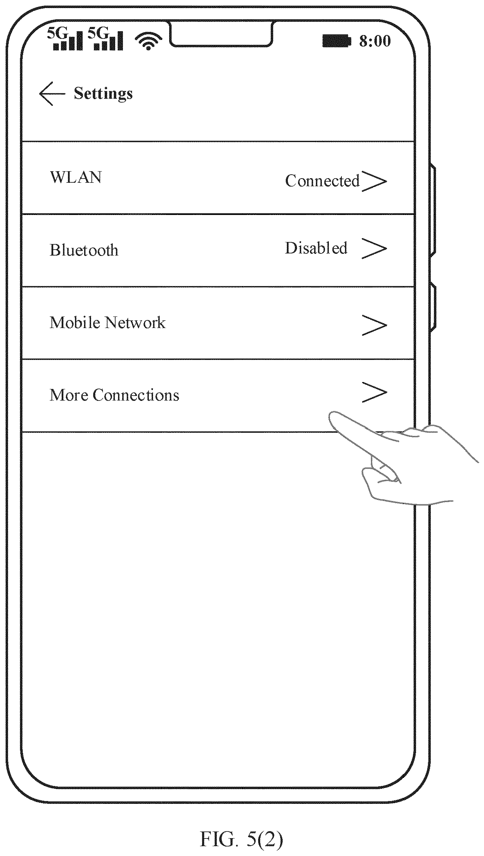

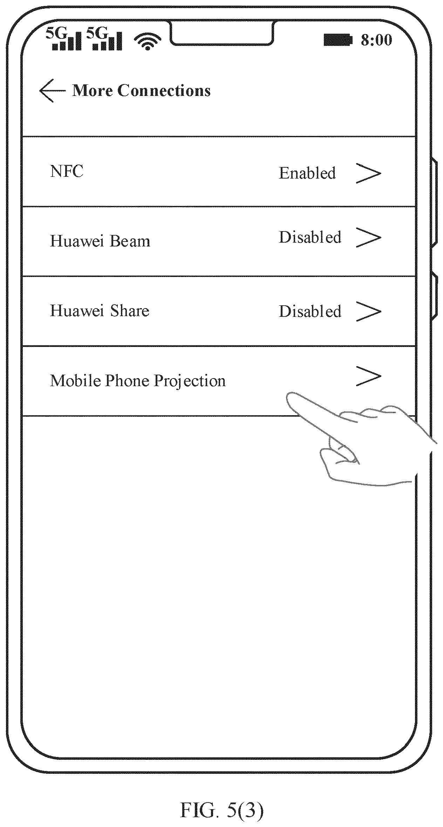

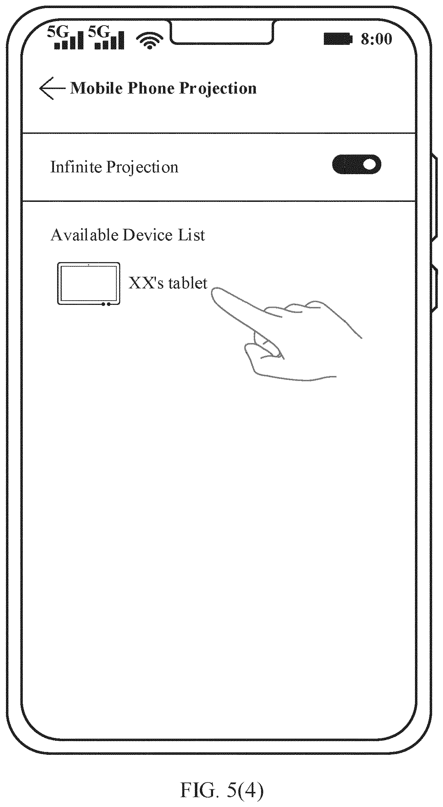

For example, FIG. 5(1) to FIG. 5(4) are schematic diagrams of examples of user interfaces. Refer to FIG. 5(1). A display interface of the mobile phone may include one or more controls, and the controls include but are not limited to an application icon control, a power control, a network control, and the like. A user may tap a setting icon control to enter a setting interface. Refer to FIG. 5(2). The mobile phone displays the setting interface in response to a received user operation. For example, the setting interface includes one or more options, and the options include but are not limited to a WLAN setting option, a Bluetooth setting option, a mobile network setting option, a more connection setting option, and the like. For example, the user may tap the more connection setting option. Refer to FIG. 5(3). For example, the mobile phone displays a more connection setting interface in response to a user operation. For example, the more connection setting interface includes one or more options, and the options include but are not limited to an NFC setting option, a Huawei Beam setting option, a Huawei Share setting option, a mobile phone projection option, and the like. For example, the user may tap the mobile phone projection setting option. Refer to FIG. 5(4). For example, the mobile phone displays a mobile phone projection setting interface in response to a received user operation. The mobile phone projection setting interface includes one or more controls, and the controls include but are not limited to an infinite projection setting option and an available device list. For example, when the infinite projection setting option is not enabled, the user may manually tap to enable the option. After the option is enabled, the mobile phone may automatically search for a nearby available P2P device, and display a device name of a found P2P device in the available device list, for example, "XX's tablet" shown in FIG. 5(4). The user may tap the P2P device displayed in the available device list, to indicate the mobile phone to perform projection to the selected tablet.

S402: The mobile phone sends a probe request (probe request) message to the tablet.

For example, the mobile phone sends the probe request message to the tablet, to request to communicate with the tablet. For example, the mobile phone may separately send the probe request message on channels 1, 6, and 11 of a 2.4 GHz frequency band. It should be noted that, in this embodiment of this application, a P2P connection establishment process on the 2.4 GHz frequency band is used as an example for description. In another embodiment, the P2P connection may alternatively work on another frequency band. This is not limited in this application.

S403: The tablet sends a probe response (probe response) message to the mobile phone.

For example, the tablet receives the probe request message on any one of the channels 1, 6, and 11, and may select one of the channels on which the probe request message is received, and send the probe response message to the mobile phone on the channel (for example, the channel 6).

S404: The mobile phone sends a GO negotiation request (GO negotiation request) message to the tablet.

For example, the mobile phone sends the GO negotiation request message to the tablet on the channel 6 in response to the received probe response message from the tablet.

S405: The tablet sends a GO negotiation response (GO negotiation response) message to the mobile phone.

For example, in response to receiving the GO negotiation request message from the mobile phone, the tablet sends the GO negotiation response message to the mobile phone on the channel 6.

S406: The mobile phone sends a GO confirm (GO confirm) message to the tablet.

It should be noted that the three frame exchanges in S404 to S406 are used to exchange information, to determine a GO and a client. Information exchanged in the three frame exchanges includes but is not limited to information such as a MAC address and a group ID of the GO. In descriptions of this embodiment of this application, an example in which the tablet is the GO and the mobile phone is the client is used for description.

S407: The tablet sends a beacon (beacon) message to the mobile phone.

For example, after the tablet and the mobile phone complete group establishment, the tablet, as a GO end, may send the beacon message (a broadcast message) (which may also be referred to as a beacon frame), to establish a projection channel with another device on the 2.4 GHz frequency band.

For example, an example in which the tablet sends the beacon message on the channel 3 of 2.4 GHz is used for description.

S408: The mobile phone and the tablet perform link authentication and association.

For example, after detecting, through listening on the channel 3, the beacon message sent by the tablet, the mobile phone initiates a link authentication and association process with the tablet. A plurality of frame exchanges are needed in the link authentication and association process, to exchange information such as MAC address information, an encryption manner, and a supported channel set.

S409: The mobile phone and the tablet perform 4-way handshake (4-way handshake).

For example, after 4-way handshake, the mobile phone and the tablet successfully establish a 2.4 GHz channel (namely, a P2P connection) on the channel 3. It should be noted that S402 to S409 in FIG. 5(1) to FIG. 5(4) are merely examples. A process of establishing the 2.4 GHz channel between the mobile phone and the tablet may include fewer or more frame exchange processes than those in FIG. 5(1) to FIG. 5(4). For carried information, formats, and functions of the frames, refer to descriptions in an existing standard. Details are not described in this application.

S410: The mobile phone performs data transmission with the tablet.

For example, as described above, after the mobile phone establishes the P2P connection with the tablet, the mobile phone may perform projection to the tablet, that is, send an image frame to the tablet, to display a corresponding image on the tablet.

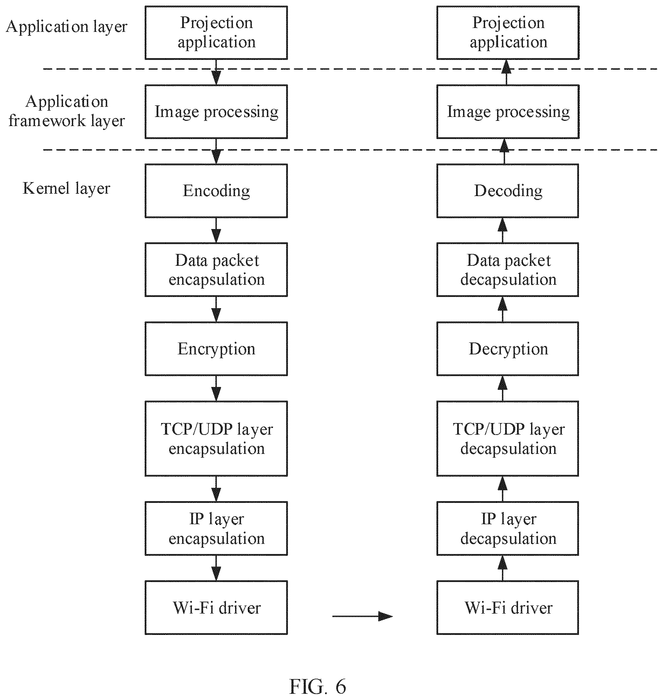

FIG. 6 is a schematic flowchart of an example of data exchange between the mobile phone and the tablet. Refer to FIG. 6. For example, a projection application of the mobile phone may generate an image that needs to be projected to the tablet, and output the image to an image processing module at an application framework layer for processing. The image processing module may perform processing such as rendering and cropping on the image, and output a processed image to a codec (which may also be referred to as a codec module). The codec encodes the image to generate an image frame. A kernel may perform data processing on the image frame. For example, a processing process includes but is not limited to data packet encapsulation, encryption, TCP (Transmission Control Protocol, Transmission Control Protocol)/UDP (User Datagram Protocol, User Datagram Protocol) layer encapsulation, and IP (Internet Protocol, Internet Protocol) layer encapsulation, to obtain an encapsulated data packet. For example, a Wi-Fi driver may send the data packet to the tablet based on the P2P connection with the tablet.

Still refer to FIG. 6. For example, a Wi-Fi driver of the tablet delivers the received data packet to a kernel for processing, and the kernel performs data processing on the data packet, including but not limited to processing such as IP layer decapsulation, TCP/UDP layer decapsulation, decryption, and data packet decapsulation. Acodec decodes data (namely, the image frame described above) obtained after decapsulation, to obtain a corresponding image. The codec outputs the image to an image processing module, and the image processing module performs image processing on the image, for example, may perform an operation, for example, rendering, and outputs a processed image to a projection application. The projection application may display a corresponding image on a display interface of the tablet. It should be noted that FIG. 6 merely describes processing steps in the projection process as an example. For specific details of the steps in FIG. 6, refer to related descriptions in embodiments of the conventional technology. Details are not described herein.

As described above, in the projection process, the mobile phone transmits the image frame to the tablet, so that the tablet displays the corresponding image. To enable a person skilled in the art to better understand an image frame transmission manner in embodiments of this application, before a specific transmission manner is described, a related concept of the image frame is first briefly described. As described above, after obtaining the image, the codec may encode the image to improve a compression ratio. An encoding scheme may include but is not limited to H.264, HEVC (High Efficiency Video Coding, high efficiency video coding), or the like.

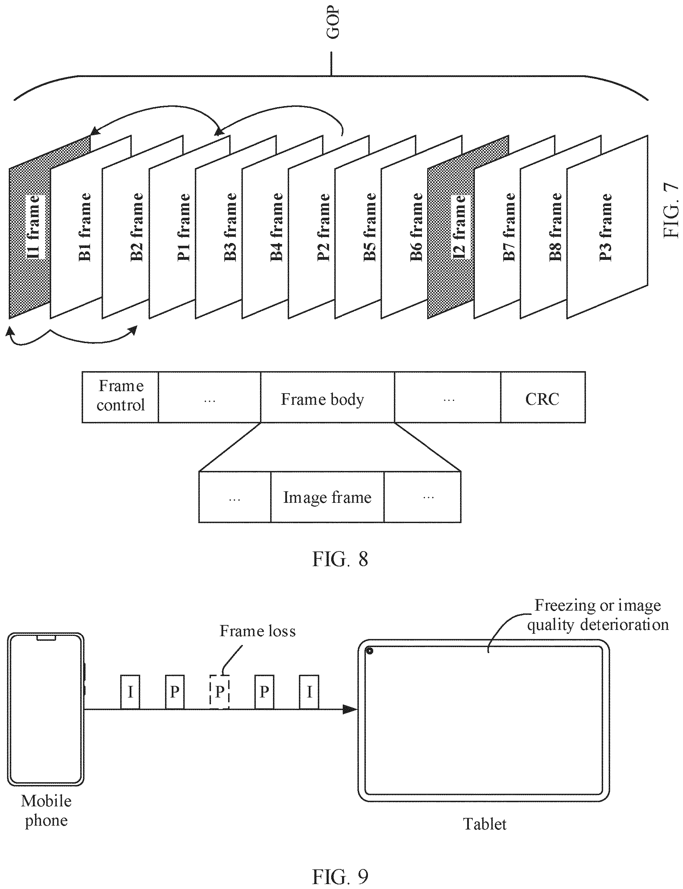

A plurality of encoded image frames may form a GOP (Group of Pictures, group of pictures). Optionally, the GOP may include one or more I-frames, and one or more B-frames and P-frames. FIG. 7 is a schematic diagram of an example of a GOP. Refer to FIG. 7. For example, the GOP includes an I1 frame, a B1 frame, a B2 frame, a P1 frame, a B3 frame, a B4 frame, a P2 frame, a B5 frame, a B6 frame, an I2 frame, a B7 frame, a B8 frame, and a P3 frame. It should be noted that types, a quantity, and a sequence of image frames in the GOP in FIG. 7 are merely examples. This is not limited in this application.

Still refer to FIG. 7. For example, the I-frame may be referred to as a complete frame, or an independently decoded frame, that is, the I-frame may be independently decoded without depending on another frame. Generally, the first frame in the GOP is the I-frame. The B-frame and the P-frame may be referred to as an inter-prediction frame. Decoding of the B-frame depends on a nearest I-frame or P-frame before and after the B-frame. The B 1 frame is used as an example. Decoding of the B1 frame depends on the I1 frame and the P1 frame. Decoding of the P-frame depends on a nearest I-frame or P-frame before the P-frame. For example, decoding of the P1 frame depends on the I1 frame, and decoding of the P2 frame depends on the P1 frame. Because the inter-prediction frame depends on a previous frame or previous and subsequent frames to complete decoding, if the I-frame or P-frame in the GOP is lost during transmission, frames whose decoding depends on the I-frame and the P-frame and subsequent frames cannot be correctly decoded, which causes erratic display or image quality deterioration during playing by a television. If the B-frame in the GOP is lost, an image corresponding to the B-frame is lost, causing image freezing.

For example, as described above, after the codec encodes the image to obtain the image frame, the kernel may encapsulate the image frame to obtain the data packet. For example, in a process in which the kernel encapsulates the image frame, a plurality of image frames may be encapsulated into one data packet. It should be noted that, in another embodiment, the mobile phone may encapsulate one image frame into one data packet, or may encapsulate one image frame into a plurality of data packets. This is not limited in this application.

FIG. 8 is a schematic diagram of an example of a format of the data packet. Refer to FIG. 8. For example, the data packet includes fields such as a frame control field, a frame body field, and CRC (Cyclic Redundancy Check, cyclic redundancy check). The control field may include indication information such as address information and data packet type information. The frame body field may include data such as an image frame. It should be noted that names and locations of the fields in FIG. 8 are merely examples. This is not limited in this application.

FIG. 9 is a schematic diagram of data transmission between the mobile phone and the tablet. Refer to FIG. 9. For example, in a process in which the mobile phone sends, to the tablet through the P2P connection, the data packet including the image frame, it is assumed that image frames sent by the mobile phone to the tablet include an I-frame, a P-frame, a P-frame, a P-frame, and an I-frame, and each frame is encapsulated as one data packet. For example, in an application scenario of this embodiment of this application, for example, the mobile phone and the tablet or a mobile phone, if the user holds the mobile phone and the tablet to walk, the mobile phone and the tablet are in a moving state. Due to movement of the device, a radio channel condition between the mobile phone and the tablet rapidly varies with time, causing a delay and jitter in projection data transmission and a frame loss. For example, as shown in FIG. 9, in a process in which the mobile phone sends a plurality of data packets to the tablet, one data packet carrying a P-frame is lost. Correspondingly, image frames received by the tablet are an I-frame, a P-frame, a P-frame, and an I-frame. For example, if the lost P-frame is lost, because the tablet does not receive the P-frame, decoding of the subsequent P-frames fails (for a concept, refer to related descriptions about image frame decoding in FIG. 7), and a problem, for example, frame freezing or image quality deterioration (for example, an artifact) occurs on the tablet.

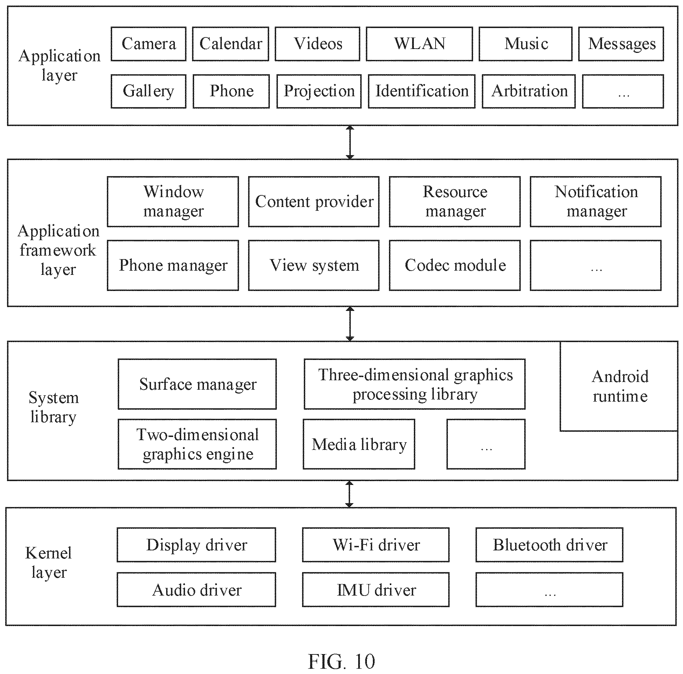

An embodiment of this application provides a communication method, to effectively enhance stability during data transmission. Robustness of data transmission of a device that is performing data exchange in a moving state can be improved, a probability of problems such as a frame loss and frame freezing during projection can be reduced, and image display quality of a receive end can be improved, so as to further improve user experience. FIG. 10 is a schematic diagram of an example of a software structure of an electronic device. Refer to FIG. 10. For example, a layered architecture, an event-driven architecture, a micro-core architecture, a micro-service architecture, or a cloud architecture may be used for the software system of the electronic device. In this embodiment of this application, the software structure of the electronic device is described by using an Android system with a layered architecture as an example.

In the layered architecture of the electronic device, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages. As shown in FIG. 10, the application layer may include applications such as Camera, Gallery, Calendar, Phone, Maps, Navigation, WLAN, Bluetooth, Music, Videos, Messages, Projection, Identification, and Arbitration. For example, in this embodiment of this application, the projection application may support the electronic device in performing projection. The identification application (which may also be referred to as an identification module) may be used by the electronic device to invoke a parameter detected by an IMU module, to identify whether the electronic device is in a moving state or a static state. The arbitration application (which may also be referred to as an arbitration module) may be used by the electronic device to adjust a configuration parameter based on an identification result of the identification module.

The application framework layer provides an application programming interface (application programming interface, API) and a programming framework for an application at the application layer. The application framework layer includes some predefined functions.

As shown in FIG. 10, the application framework layer may include a window manager, a content provider, a view system, a phone manager, a resource manager, a notification manager, a codec module (also referred to as a codec), and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application program. The data may include a video, an image, audio, calls that are made and answered, a browsing history and bookmarks, an address book, and the like.

The view system includes visual controls such as a control for displaying a text and a control for displaying an image. The view system may be configured to construct an application program. A display interface may include one or more views. For example, a display interface including an SMS message notification icon may include a text display view and an image display view.

The phone manager is configured to provide a communication function of the electronic device, for example, management of a call status (including answering, declining, or the like).

The resource manager provides various resources such as a localized character string, an icon, a picture, a layout file, and a video file for an application program.

The notification manager enables an application program to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears in the screen in a form of a dialog window. For example, text information is displayed in the status bar, an announcement is given, the electronic device vibrates, or the indicator light blinks.

The codec may support one or more video codecs, and may encode or decode an image. In this way, the electronic device may play or record videos in a plurality of encoding formats.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, a Wi-Fi driver, a Bluetooth driver, an IMU driver, and the like.

It may be understood that components included in the system framework layer and the system library and runtime layer shown in FIG. 10 do not constitute a specific limitation on the electronic device. In some other embodiments of this application, the electronic device may include more or fewer components than those shown in the figure, or some components may be combined, or some components may be split, or there may be a different component layout.

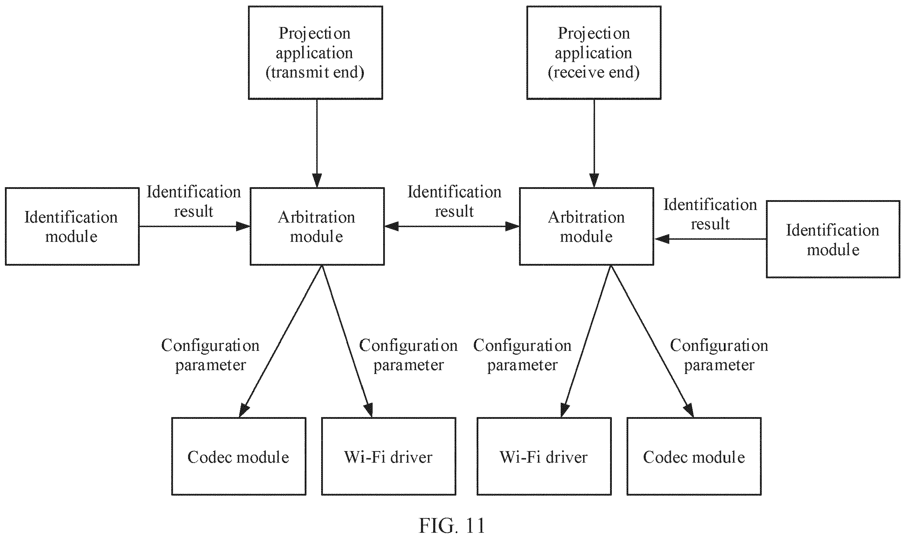

With reference to the application scenario shown in FIG. 1a, the following describes in detail the technical solutions in this embodiment of this application by using a projection scenario between a mobile phone and a tablet as an example. FIG. 11 is a schematic diagram of an example of module interaction. Refer to FIG. 11. For example, after the mobile phone establishes a P2P connection with the tablet in response to a user operation, the mobile phone serves as a transmit end to send image data to the tablet (namely, a receive end), that is, sends a data packet including an image frame. For a specific description, refer to the foregoing descriptions. Details are not described herein again.

The following describes a processing process of a mobile phone end (namely, the transmit end) with reference to FIG. 11. Refer to FIG. 11. For example, after a projection application is started, an arbitration module and an identification module may be started (that is, invoked). After being started, the identification module obtains, from an IMU driver, a parameter (or information) detected by an IMU module (for example, the IMU module 180 in FIG. 2). The identification module may detect a status of the electronic device based on the obtained parameter. The status includes a moving state or a static state. For example, the identification module may set a corresponding moving state threshold. For example, if the parameter obtained by the identification module is greater than or equal to the moving state threshold, it may be determined that the electronic device is in the moving state. If the parameter obtained by the identification module is less than the moving state threshold, it may be determined that the electronic device is in the static state.

For example, the IMU driver may obtain, in real time, the parameter detected by the IMU module. Optionally, the IMU driver may periodically send the obtained parameter to the identification module. Optionally, the identification module may periodically request, from the IMU driver, the parameter obtained by the IMU driver.

Optionally, the identification module may further obtain a MIMO condition number from a Wi-Fi driver. The identification module may further determine the status of the electronic device based on the parameter detected by the IMU module and the MIMO condition number, to prevent misjudgment. For example, a jitter amplitude of the MIMO condition number may be used to indicate a motion status of the electronic device. For example, if a jitter range (which may be set based on an actual requirement, and is not limited in this application) of the MIMO condition number is large, the identification module may determine that the electronic device is in the moving state. If the jitter range of the MIMO condition number is small, it may be determined that the electronic device is in the static state. For example, the identification module may jointly determine a determining result that is based on the parameter input by the IMU module and a determining result that is based on the MIMO condition number, to determine whether the electronic device is in the moving state. Optionally, in this embodiment of this application, if the identification module determines, based on any parameter, that the electronic device is in the moving state, it may be determined that the electronic device is in the moving state. For example, if the identification module determines, based on the parameter input by the IMU module, that the electronic device is in the static state, and determines, based on the MIMO condition number, that the electronic device is in the moving state, the identification module determines that the electronic device is in the moving state.

Still refer to FIG. 11. For example, the identification module outputs an identification result (including the moving state or the static state) to the arbitration module. The arbitration module may determine, based on the identification result input by the identification module, whether the electronic device is currently in the moving state or the static state.

Optionally, when the arbitration module detects that the status of the electronic device changes, for example, an identification result obtained from the identification module in a previous periodicity indicates that the electronic device is in the moving state, and an identification result obtained from the identification module in a current periodicity indicates that the electronic device is in the static state. In this case, the arbitration module may continue to monitor an identification result input by the identification module in one or more subsequent periodicities, to determine the status of the electronic device. For example, after the arbitration module obtains, in a current periodicity, an identification result indicating that the electronic device is in the static state, the arbitration module may further obtain an identification result input by the identification module in the next periodicity. If in the next periodicity, the identification result input by the identification module indicates that the electronic device is in the static state, the arbitration module may determine that the electronic device is in the static state. If in the next periodicity, the identification result input by the identification module indicates that the electronic device is in the moving state, the arbitration module may determine that the electronic device is still in the moving state.

Still refer to FIG. 11. For example, after the current status (including the moving state or the static state) of the electronic device is determined based on an arbitration result, configuration information of the codec module and/or configuration information of the Wi-Fi driver may be adjusted based on the current status of the electronic device.

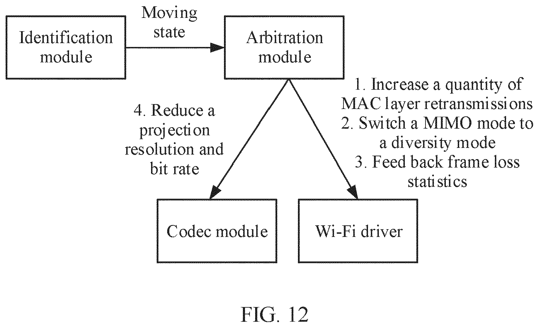

FIG. 12 is a schematic diagram of an example of a configuration process for a transmit end (namely, the mobile phone). Refer to FIG. 12. For example, a scenario in which a user holds the mobile phone and a tablet to go upstairs (or may be a scenario of cycling, running, driving (for example, in a driving vehicle, or on a driving high-speed railway), or the like) is used as an example for description. Correspondingly, the identification module identifies that the mobile phone is currently in the moving state. After the identification module identifies that the mobile phone is in the moving state, the identification module outputs the identification result (namely, the moving state) to the arbitration module. The arbitration module determines, in response to the received identification result input by the identification module, that the mobile phone is in the moving state. The arbitration module pre-stores configuration information corresponding to the moving state and configuration information corresponding to the static state. The arbitration module may obtain the pre-stored configuration information corresponding to the moving state, and adjust configuration information corresponding to configuration of the codec module and/or the Wi-Fi driver.

For example, in this embodiment of this application, the configuration information corresponding to the moving state includes but is not limited to:
1. Increase a quantity of MAC layer retransmissions.
2. Switch a MIMO (multiple input multiple output, multiple-input multiple-output) mode to a diversity mode.
3. Feed back frame loss statistics.
4. Decrease a projection resolution and/or bit rate.

For example, the mobile phone may select at least one of the foregoing several configuration manners for configuration.

The following separately describes the foregoing configuration information.

### 1. Increase the quantity of MAC layer retransmissions.

For example, based on a MAC layer protocol specification, in a data transmission process, the mobile phone may set the quantity of MAC layer retransmissions. For example, a quantity of MAC layer retransmissions corresponding to the moving state may be 100. That is, the arbitration module may configure the Wi-Fi driver, for example, send an indication signal to the Wi-Fi driver, to indicate the Wi-Fi driver to set the quantity of MAC layer retransmissions to 100.

Optionally, the arbitration module may preset a plurality of quantities of retransmissions, and set a correspondence between different intensities of the moving state and the quantity of retransmissions. The arbitration module may determine a corresponding quantity of retransmissions based on an intensity of the moving state. For example, when the identification module outputs the identification result, in addition to the information indicating that the electronic device is in the moving state, the identification result may further include information used to indicate the intensity of the moving state of the electronic device. For example, the identification module may set a correspondence between different parameters and the intensity of the moving state, and the identification module may determine a corresponding intensity of the moving state based on the parameter obtained from the IMU driver. The identification module may indicate the detected intensity of the moving state and the moving state to the arbitration module. Correspondingly, the arbitration module may determine a corresponding quantity of retransmissions based on the obtained intensity of the moving state.

For example, in response to the received quantity (for example, 100) of retransmissions that is indicated by the arbitration module, the Wi-Fi driver may send the data packet according to the obtained quantity of retransmissions. For example, the Wi-Fi driver sends a data packet. If the Wi-Fi driver receives an acknowledgment message (for example, an ACK (Acknowledge character, acknowledgment character) message) fed back by a peer end, the Wi-Fi driver continues to send a next data packet. If the Wi-Fi driver does not receive, within predetermined duration, the ACK message fed back by the peer end, the Wi-Fi driver resends the data packet. That is, before receiving the ACK message fed back by the peer end, the Wi-Fi driver may repeatedly send the data packet a maximum of 100 times.

Optionally, in this embodiment of this application, the Wi-Fi driver may send the data packet in a data packet aggregation manner. For example, when sending the data packet, the Wi-Fi driver may simultaneously send 64 data packets (which may be set based on an actual requirement, and this is not limited in this application). After sending the 64 data packets, the Wi-Fi driver receives an ACK message for each data packet fed back by the peer end. When the Wi-Fi driver detects that an ACK message corresponding to at least one data packet is not received, the Wi-Fi driver resends the at least one data packet.

### 2. Switch the MIMO mode to the diversity mode.

In this embodiment of this application, both the mobile phone and the tablet perform MIMO communication. For example, the arbitration module may send an indication signal to the Wi-Fi driver, to indicate the Wi-Fi driver to adjust the MIMO mode to the diversity mode.

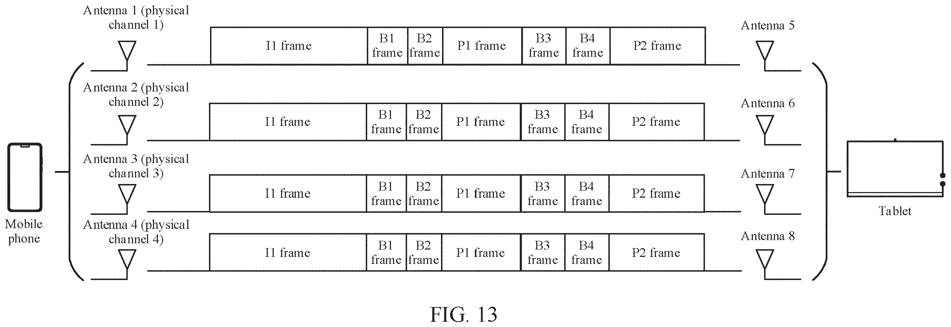

FIG. 13 is a schematic diagram of an example of communication in the diversity mode. Refer to FIG. 13. For example, the mobile phone includes an antenna 1, an antenna 2, an antenna 3, and an antenna 4, and each antenna corresponds to a physical channel 1, a physical channel 2, a physical channel 3, and a physical channel 4. The mobile phone can transmit a same data packet on each physical channel. For example, image frames sent by the mobile phone include an I1 frame, a B2 frame, a B2 frame, a P1 frame, a B3 frame, a B4 frame, and a P2 frame. Each image frame may be included in one or more data packets. When the mobile phone uses the diversity mode, a same data packet may be transmitted on each channel, that is, the foregoing image frame is transmitted on each channel, to resist channel fading and reduce a bit error rate. Correspondingly, the panel receives the same data packet on an antenna 5, an antenna 6, an antenna 7, and an antenna 8. It should be noted that a length of each image frame shown in FIG. 13 is used to indicate an amount of data of the image frame, or may be used to identify transmission duration. That is, an image frame with a larger amount of data corresponds to longer transmission duration.

### 3. Feed back frame loss statistics.

For example, the arbitration module may send an indication signal to the Wi-Fi driver, to indicate the Wi-Fi driver to start to feed back the frame loss statistics.

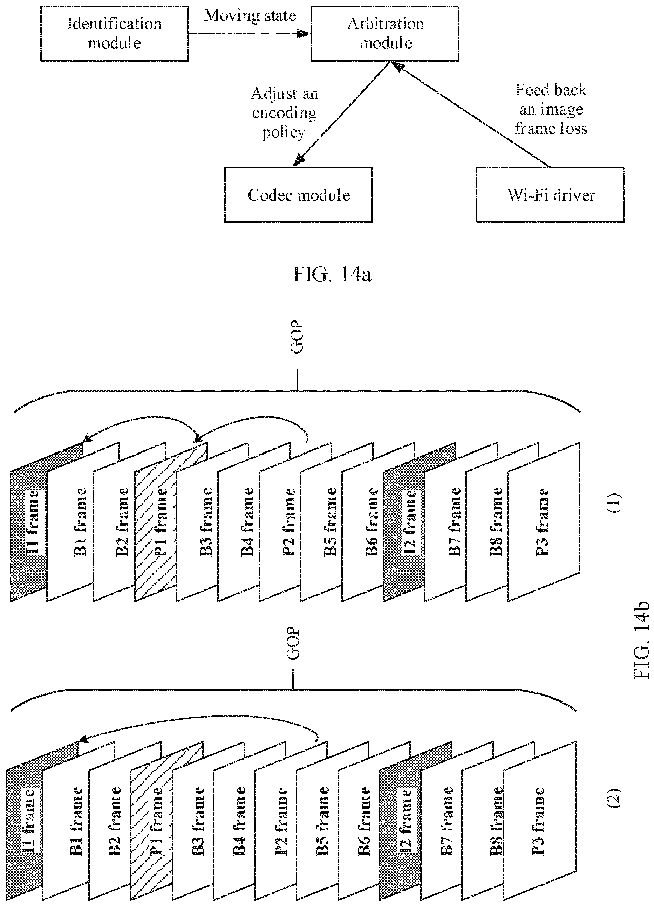

In an example, FIG. 14a is a schematic diagram of an example of feeding back the frame loss statistics. Refer to FIG. 14a. For example, after the Wi-Fi driver has sent the data packet a set quantity of retransmissions and the ACK message fed back by the peer end is still not received, the Wi-Fi driver may determine that the data packet fails to be transmitted, that is, an image frame carried in the data packet fails to be transmitted. The Wi-Fi driver can feed back an image frame loss to the arbitration module. For example, in response to the lost image frame fed back by the Wi-Fi driver, the arbitration module sends indication information to the codec module, to indicate the codec module to adjust an encoding policy.

For example, FIG. 14b is a schematic diagram of an example of adjusting the encoding policy. For example, the GOP in FIG. 7 is used as an example. Refer to (1) in FIG. 14b. It is assumed that the P1 frame is lost in the transmission process. The Wi-Fi driver feeds back a loss of the P1 frame to the arbitration module. The arbitration module indicates the codec module to adjust the encoding policy of the image frame that depends on the P1 frame. As described above, decoding of the P2 frame depends on the P1 frame. Therefore, when the P1 frame is lost, the codec may adjust an encoding policy of the P2 frame based on the indication of the arbitration module during encoding, so that the P2 frame is encoded based on the I1 frame, as shown in (2) in FIG. 14b. For example, each image frame includes image frame description information, and the image frame description information may include information indicating an encoding dependency relationship (which may also be referred to as an inter-prediction relationship). Correspondingly, during decoding, the codec at the receive end may determine, based on the image frame description information in the image frame, that the P2 frame may be decoded based on the I1 frame, thereby avoiding a problem that the P2 frame fails to be decoded due to the loss of the P1 frame.

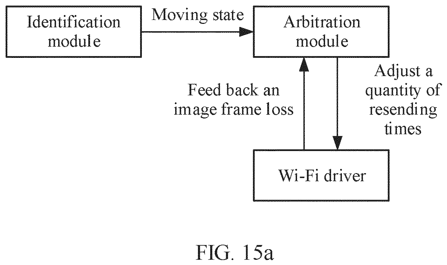

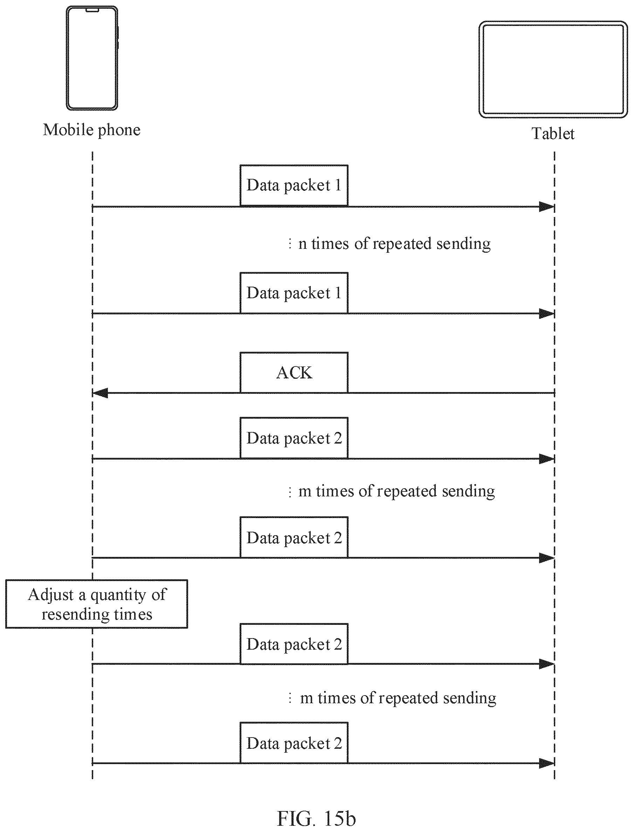

In another example, FIG. 15a is a schematic diagram of another example of feeding back frame loss statistics. Refer to FIG. 15a. For example, the Wi-Fi driver feeds back an image frame loss to the arbitration module (for details, refer to the foregoing description, and details are not described herein again). The arbitration module adjusts the quantity of resending times of the Wi-Fi driver in response to the received feedback from the Wi-Fi driver. For example, refer to FIG. 15b. For example, the mobile phone sends a data packet 1 to the tablet, and after repeatedly sending the data packet 1 n times, receives an ACK message fed back by the tablet, where n is an integer greater than 0 and less than a maximum quantity of transmissions that corresponds to a current status (which may be the moving state or may be the static state). For example, the Wi-Fi driver sends a data packet 2. The Wi-Fi driver repeatedly sends the data packet 2 m times, where m is a maximum quantity of transmissions that corresponds to a current status, for example, may be a maximum quantity (for example, 100) of transmissions that corresponds to the moving state. The Wi-Fi driver determines that the data packet 2 fails to be sent, and the Wi-Fi driver feeds back a loss of an image frame to the arbitration module. For example, the data packet 2 carries the image frame P2, and the Wi-Fi driver feeds back a loss of the image frame P2 to the arbitration module. For example, the arbitration module indicates the Wi-Fi driver to adjust a quantity of resending times, that is, the arbitration module indicates the Wi-Fi driver to resend the data packet 2. For example, the arbitration module may indicate the Wi-Fi driver to adjust the quantity of resending times to 200, that is, the Wi-Fi driver adjusts the original quantity (for example, 100) of retransmissions to 200. That is, the Wi-Fi driver may send the data packet 2 again, and a maximum quantity of retransmissions may reach 100. For example, it is assumed that the Wi-Fi driver still does not receive the ACK message after retransmitting the data packet 2. In an example, the Wi-Fi driver may provide a feedback to the arbitration module again, and the arbitration module may again indicate the Wi-Fi driver to perform retransmission. In another example, the Wi-Fi driver determines that the data packet 2 is lost, and may continue to transmit a next data packet. In still another example, the Wi-Fi driver may feed back an image frame loss to the arbitration module, and the arbitration module may adjust an encoding policy of an encoder (for description, refer to the foregoing description, and details are not described herein again).

### 4. Decrease the projection resolution and/or bit rate.

For example, the arbitration module may send an indication signal to the codec module, to indicate the codec module to decrease the resolution and/or bit rate of the image frame during encoding. For example, the bit rate may be any one of 5 Mbps, 10 Mbps, and 30 Mbps, and the resolution may be any one of 1080p, 2K, and 4K. That is, when a communication channel may vary with time in the moving state, the resolution and/or bit rate of the image frame may be decreased, so that an amount of data transmitted by the transmit end is reduced, so as to reduce use of wireless bandwidth.

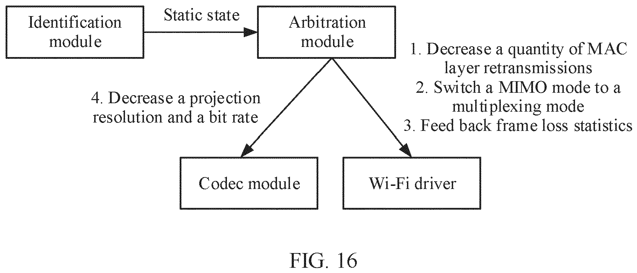

FIG. 16 is a schematic diagram of an example of a configuration process for a transmit end (namely, the mobile phone). For example, the mobile phone and the tablet are in the static state on a desktop. It should be noted that a single scenario is used as an example in embodiments of this application. In another embodiment, the technical solutions in embodiments of this application may be applied to switching between different states. For example, when a user holds the mobile phone and the tablet in a running process, the mobile phone may identify that the mobile phone is currently in the moving state (the tablet is the same as the mobile phone). After the user holds the mobile phone and the tablet from running to static, the mobile phone may identify that the mobile phone is currently in the static state.

Refer to FIG. 16. The identification module may identify that the mobile phone is currently in the static state. The identification module identifies that the mobile phone is in the static state, and the identification module outputs an identification result (namely, the static state) to the arbitration module. The arbitration module determines, in response to the received identification result input by the identification module, that the mobile phone is in the static state. As described above, the arbitration module pre-stores configuration information corresponding to the static state. The arbitration module may obtain the pre-stored configuration information corresponding to the static state, and adjust configuration information corresponding to configuration of the codec module and/or the Wi-Fi driver.

For example, in this embodiment of this application, the configuration information corresponding to the static state includes but is not limited to:
1. Decrease a quantity of MAC layer retransmissions.
2. Switch a MIMO mode to a multiplexing mode.
3. Feed back frame loss statistics.
4. Increase a projection resolution and/or bit rate.

For example, the mobile phone may select at least one of the foregoing several configuration manners for configuration. The following separately describes the foregoing configuration information.

### 1. Decrease the quantity of MAC layer retransmissions.

For example, based on a MAC layer protocol specification, in a data transmission process, the mobile phone may set the quantity of MAC layer retransmissions. For example, a quantity of MAC layer retransmissions that corresponds to the static state may be 20, that is, the quantity of MAC layer retransmissions that corresponds to the static state is less than the maximum quantity of transmissions that corresponds to the moving state. Therefore, the quantity of MAC layer retransmissions that corresponds to the static state is decreased, thereby reducing a data transmission delay. The arbitration module may configure the Wi-Fi driver, for example, send an indication signal to the Wi-Fi driver, to indicate the Wi-Fi driver to set the quantity of MAC layer retransmissions to 20.

For example, in response to the received quantity of retransmissions (for example, 20) that is indicated by the arbitration module, the Wi-Fi driver may send the data packet according to the obtained quantity of retransmissions. For example, the Wi-Fi driver sends a data packet. If the Wi-Fi driver receives an acknowledgment message (for example, an ACK (Acknowledge character, acknowledgment character) message) fed back by a peer end, the Wi-Fi driver continues to send a next data packet. If the Wi-Fi driver does not receive, within predetermined duration, the ACK message fed back by the peer end, the Wi-Fi driver resends the data packet. That is, before receiving the ACK message fed back by the peer end, the Wi-Fi driver may repeatedly send the data packet a maximum of 20 times.

### 2. Switch the MIMO mode to the multiplexing mode.

For example, the arbitration module may send an indication signal to the Wi-Fi driver, to indicate the Wi-Fi driver to adjust the MIMO mode to the multiplexing mode.

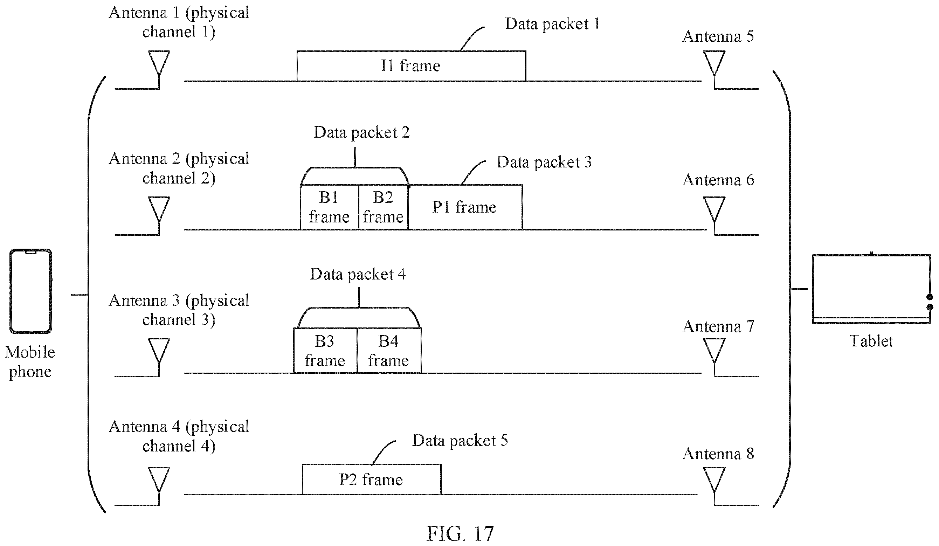

FIG. 17 is a schematic diagram of an example of communication in the multiplexing mode. Refer to FIG. 17. For example, the mobile phone includes an antenna 1, an antenna 2, an antenna 3, and an antenna 4, and each antenna corresponds to a physical channel 1, a physical channel 2, a physical channel 3, and a physical channel 4. The mobile phone can transmit different data packets on each physical channel. For example, the data packet sent by the mobile phone includes: a data packet 1 carrying an I1 frame, a data packet 2 carrying a B2 frame and a B2 frame, a data packet 3 carrying a P1 frame, a data packet 4 carrying a B3 frame and a B4 frame, and a data packet 5 carrying a P2 frame. When the mobile phone uses the multiplexing mode, different data packets may be transmitted on each channel. For example, the data packet 1 is sent on the physical channel 1, the data packet 2 and the data packet 3 are sent on the physical channel 2, the data packet 4 is sent on the physical channel 3, and the data packet 5 is sent on the physical channel 4. In this way, a system capacity is increased.

### 3. Feed back the frame loss statistics.

For a manner of feeding back the frame loss statistics, refer to related descriptions of the moving state, that is, FIG. 14a to FIG. 15b. Details are not described herein again.

### 4. Increase the projection resolution and/or bit rate.

For example, the arbitration module may send an indication signal to the codec module, to indicate the codec module to increase the resolution and/or bit rate of the image frame during encoding, to improve image quality at the receive end.

Still refer to FIG. 11. The following describes a processing process of the receive end (for example, the tablet). For example, after a projection application of the tablet is started, an arbitration module and an identification module of the tablet may be started (that is, invoked). After being started, the identification module obtains, from an IMU driver, a parameter (or information) detected by an IMU module (for example, the IMU module 180 in FIG. 2). The identification module may detect a status of the electronic device based on the obtained parameter. The status includes a moving state or a static state. The identification module may output an identification result to the arbitration module. For a part that is not described, refer to related content of the transmit end (namely, the mobile phone). Details are not described herein again.

Still refer to FIG. 11. For example, the identification module outputs the identification result (including the moving state or the static state) to the arbitration module. The arbitration module may determine, based on the identification result input by the identification module, whether the electronic device is currently in the moving state or the static state.

Still refer to FIG. 11. For example, after a current status (including the moving state or the static state) of the electronic device is determined based on an arbitration result, a configuration parameter of a codec module and/or configuration information of a Wi-Fi driver may be adjusted based on the current status of the electronic device. For a part that is not described, refer to related content of the transmit end. Details are not described herein again.

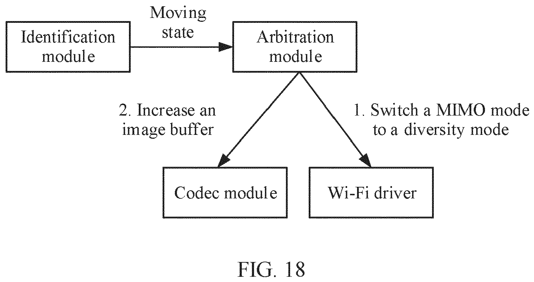

FIG. 18 is a schematic diagram of an example of a configuration process for the receive end (namely, the tablet). Refer to FIG. 18. For example, a case in which a user holds the mobile phone and the tablet to go upstairs (or may ride a bike, run, or the like) is used for description. Correspondingly, the identification module identifies that the tablet is currently in the moving state. The identification module identifies that the tablet is in the moving state, and the identification module outputs an identification result (namely, the moving state) to the arbitration module. The arbitration module determines, in response to the received identification result input by the identification module, that the tablet is in the moving state. The arbitration module pre-stores configuration information corresponding to the moving state and configuration information corresponding to the static state. The arbitration module may obtain the pre-stored configuration information corresponding to the moving state, and adjust configuration information corresponding to configuration of the codec module and/or the Wi-Fi driver.

For example, in this embodiment of this application, the configuration information corresponding to the moving state includes but is not limited to:
1. Switch a MIMO mode to a diversity mode.
2. Increase an image frame buffer.

For example, the tablet may select at least one of the foregoing several configuration manners for configuration. The following separately describes the foregoing configuration information.

### 1. Switch the MIMO mode to the diversity mode.

For example, the arbitration module may indicate the Wi-Fi driver to switch the MIMO mode to the diversity mode. The Wi-Fi driver performs diversity reception on the data packet sent by the transmit end (namely, the mobile phone). For an implementation of diversity reception, refer to the conventional technology. Details are not described in this application.

### 2. Increase the image frame buffer.

For example, the arbitration module may send an indication signal to the codec module, to indicate the codec module to increase the image buffer. For example, a current image buffer of the codec module may buffer images corresponding to three image frames. The arbitration module may indicate the codec module to increase the image buffer so that the buffer can buffer images (which may be set based on an actual requirement, and this is not limited in this application) corresponding to 30 image frames, thereby reducing a frame loss caused by unstable arrival time of image frame transmission.

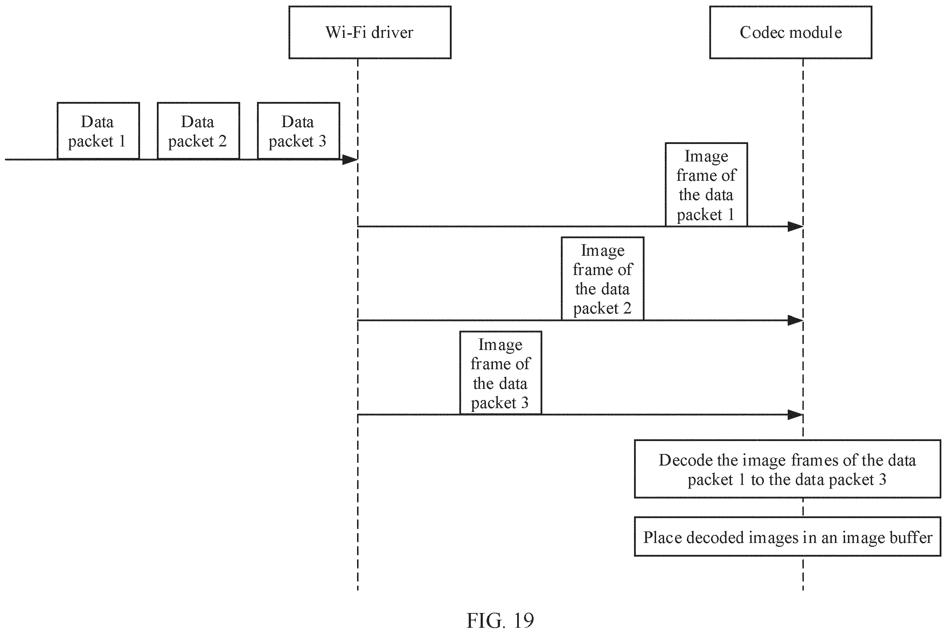

For example, FIG. 19 is a schematic flowchart of an example of module interaction. Refer to FIG. 19. For example, due to impact such as channel interference, a delay of transmitting the data packet sent by the transmit end may be increased, and as a result, the receive end (for example, the tablet) may receive a plurality of data packets at a same moment. FIG. 19 is used as an example. The Wi-Fi driver of the tablet receives a data packet 1, a data packet 2, and a data packet 3. After performing corresponding processing on the data packet 1 to the data packet 3, the Wi-Fi driver outputs image frames (including an image frame of the data packet 1, an image frame of the data packet 2, and an image frame of the data packet 3) carried in the data packet 1 to the data packet 3 to the codec module. For example, the image frame of the data packet 1 is 10 image frames, the image frame of the data packet 2 includes 10 image frames, and the image frame of the data packet 3 includes 10 image frames. That is, the codec module receives 30 image frames in total.

Still refer to FIG. 19. For example, the codec module may decode the image frames (namely, the 30 image frames) of the received data packet 1 to data packet 3, to obtain images corresponding to the 30 image frames. As described above, the codec module has increased the image buffer so that the buffer can buffer 30 images, and the codec module may place the 30 images corresponding to the 30 image frames in the image buffer. The image processing module (refer to the descriptions in FIG. 6) may sequentially extract images from the image buffer of the codec module, process the images, and output the processed images to the projection application. The projection application can display the images.

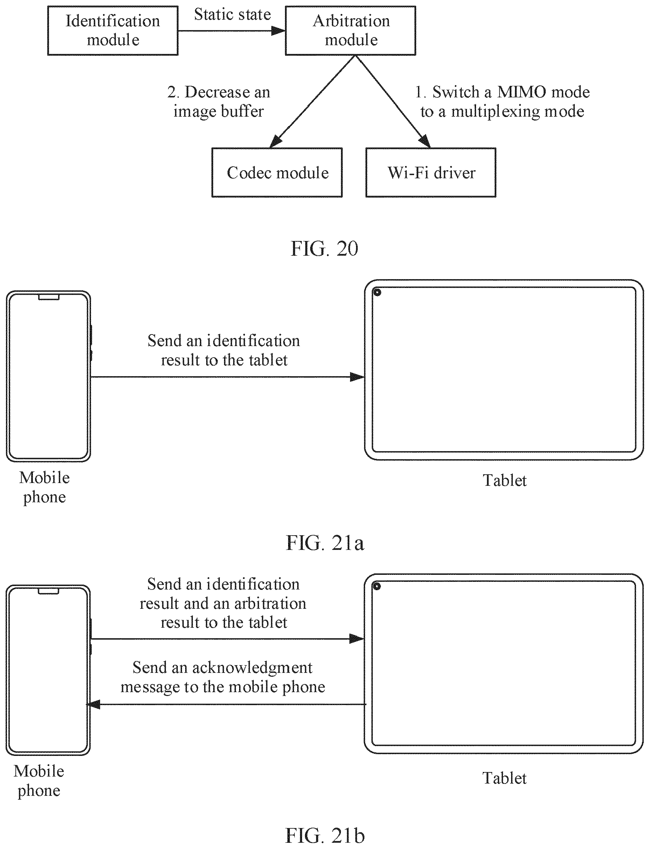

FIG. 20 is a schematic diagram of an example of a configuration process for the receive end (namely, the tablet). For example, the mobile phone and the tablet are in the static state on a desktop. Refer to FIG. 20. The identification module may identify that the tablet is currently in the static state. The identification module identifies that the tablet is in the static state, and the identification module outputs an identification result (namely, the static state) to the arbitration module. The arbitration module determines, in response to the received identification result input by the identification module, that the tablet is in the static state. As described above, the arbitration module pre-stores configuration information corresponding to the static state. The arbitration module may obtain the pre-stored configuration information corresponding to the static state, and adjust the configuration information corresponding to configuration of the codec module and/or the Wi-Fi driver.

For example, in this embodiment of this application, the configuration information corresponding to the static state includes but is not limited to:
1. Switch a MIMO mode to a multiplexing mode.
2. Decrease an image frame buffer.

For example, the tablet may select at least one of the foregoing several configuration manners for configuration. The following separately describes the foregoing configuration information.
1. Switch the MIMO mode to the multiplexing mode.

For example, the arbitration module may indicate the Wi-Fi driver to switch the MIMO mode to the multiplexing mode. The Wi-Fi driver performs multiplexing reception on a data packet sent by the transmit end (namely, the mobile phone). For an implementation of multiplexing reception, refer to the conventional technology. Details are not described in this application.

2. Decrease the image frame buffer.

For example, the arbitration module may send an indication signal to the codec module, to indicate the codec module to decrease the image buffer. For example, a size of a current image buffer of the codec module corresponds to the moving state, for example, images corresponding to 30 image frames may be buffered. The arbitration module may indicate the codec module to reduce the image buffer so that the image buffer can buffer images corresponding to three image frames (which may be set based on an actual requirement, and this is not limited in this application), so that the projection application can display an image in time, thereby reducing a projection display delay. For a part that is not described, refer to related content above. Details are not described herein again.

It should be noted that "increase" or "decrease" in this embodiment of this application is a relative change relative to the configuration information. It may be understood that the configuration information in the static state is reduced compared with the configuration information in the moving state, or the configuration information in the moving state is increased compared with the configuration information in the static state. For example, if the arbitration module of the mobile phone in a current periodicity does not configure the quantity of MAC layer retransmissions when configuring the information, that is, transmission is still performed according to the quantity (for example, 20) of MAC layer retransmissions in the static state, in the next periodicity, if the arbitration module determines that the mobile phone is in the static state, because the quantity of retransmissions is already the quantity of retransmissions that corresponds to the static state, the quantity of retransmissions does not need to be configured again.

Still refer to FIG. 11. For example, after determining a current status (including the moving state and the static state) of the device, the arbitration module of the mobile phone may send an identification result (that is, including the moving state or the static state) to the tablet through the P2P connection with the tablet. The tablet side is the same, and details are not described herein again.

For example, in this embodiment of this application, if one end of the electronic device in the projection scenario is in the moving state, the other end is correspondingly configured as the moving state. For example, the mobile phone and the tablet perform configuration based on the configuration information in the static state only when both ends are in the static state.

For example, refer to FIG. 21a. For example, the arbitration module of the mobile phone determines that the mobile phone is in the moving state, the arbitration module performs configuration based on a configuration parameter corresponding to the moving state, and the arbitration module sends indication information to the tablet, where the indication information includes an identification result, to indicate that the mobile phone is currently in the moving state. In response to the received indication information, the tablet determines that the mobile phone is in the moving state, and the arbitration module in the tablet performs configuration based on a configuration parameter corresponding to the moving state. That is, even if the arbitration module of the tablet determines that the tablet is currently in the static state and is configured as a configuration corresponding to the static state, if the tablet receives the indication information indicating that the mobile phone is in the moving state, the arbitration module of the tablet changes the configuration to a configuration corresponding to the moving state. The tablet side is the same, and details are not described herein again.

In a possible implementation, the arbitration module of the mobile phone may send a changed status to the tablet when the status of the mobile phone changes. For example, after the arbitration module of the mobile phone determines that the mobile phone changes from the static state to the moving state, the mobile phone sends indication information to the tablet, where the indication information includes an identification result, to indicate that the mobile phone is currently in the moving state. In response to the received indication information, the tablet determines that the mobile phone is in the moving state, and the arbitration module in the tablet performs configuration based on a configuration parameter corresponding to the moving state. For example, if the mobile phone detects, in a next periodicity, that the mobile phone is still in the moving state, the mobile phone may not send the indication information, to reduce resource occupation of a radio channel. Correspondingly, before receiving the indication information indicating that the mobile phone changes to the static state, the tablet determines that the mobile phone is in the moving state. The tablet side is the same, and details are not described herein again.

In a possible implementation, as described above, the mobile phone may switch the MIMO mode during configuration. It should be noted that, if the mobile phone side chooses to switch the MIMO mode in a configuration process, a peer end (namely, the tablet) also needs to switch to a corresponding mode, so as to ensure that the peer end can correctly perform reception. The tablet side is the same, and details are not described herein again. Correspondingly, to ensure that the peer end can switch to the same mode, to correctly receive the data packet sent by the mobile phone, as shown in FIG. 21b, for example, when sending the identification result to the tablet, the mobile phone further needs to send an arbitration result, where the arbitration result is used to indicate the mobile phone to determine, based on the identification result, a MIMO mode (including the diversity mode or the multiplexing mode) to be switched to. After receiving the identification result and the arbitration result that are sent by the mobile phone, the tablet correspondingly switches the MIMO mode. For example, if the mobile phone determines, based on the moving state, that the MIMO mode needs to be switched to the diversity mode, the tablet also needs to be configured to be in the diversity mode. The tablet sends an acknowledgment message to the mobile phone to indicate that the tablet has switched to a corresponding MIMO mode (for example, the diversity mode). After receiving the acknowledgment message sent by the tablet, the mobile phone switches the MIMO mode to the diversity mode.

With reference to FIG. 11, the following uses a specific example to describe the foregoing implementation. For example, an example in which a user holds the mobile phone and the tablet in the static state and starts the projection application on the mobile phone is used. After the P2P connection is established between the mobile phone and the tablet, an initial status of the mobile phone and the tablet may be the static state by default. As described above, after determining the static state, the arbitration module may select at least one configuration manner corresponding to the static state for configuration. For example, the arbitration module of the mobile phone may indicate that the MIMO mode of the Wi-Fi driver is the multiplexing mode, and the quantity of MAC layer retransmissions is 20. The arbitration module in the tablet indicates that the MIMO mode of the Wi-Fi driver is the multiplexing mode, and the image buffer can buffer three images.

For example, the Wi-Fi driver of the mobile phone and the Wi-Fi driver of the tablet may perform data exchange based on a current configuration. For example, the user holds the mobile phone and the tablet to go upstairs. Both the identification module in the mobile phone and the identification module in the tablet detect that currently the device is in the moving state. The mobile phone is used as an example. The identification module in the mobile phone outputs an identification result to the arbitration module, to indicate that the mobile phone is in the moving state. Similarly, the arbitration module of the mobile phone may perform configuration based on at least one piece of configuration information corresponding to the moving state. For example, if a current MIMO mode of the Wi-Fi driver is the multiplexing mode, after determining that the mobile phone is in the moving state, the arbitration module may indicate the Wi-Fi driver to switch the MIMO mode to the diversity mode. Optionally, the arbitration module may not indicate the Wi-Fi driver to perform MIMO mode switching, but choose to increase the quantity of MAC layer retransmissions. That is, in the moving state, the mobile phone can still use the multiplexing mode for communication.

For example, after determining that the mobile phone is in the moving state, the arbitration module choose to increase the quantity of MAC layer retransmissions and feed back frame loss statistics. The arbitration module indicates the Wi-Fi driver to perform corresponding configuration. For details, refer to the foregoing description. Details are not described herein again. The Wi-Fi driver can transmit data based on a changed configuration. The mobile phone sends an identification result to the tablet, to indicate the mobile phone to switch to the moving state. Processing on a tablet side is similar to that on a mobile phone side, and details are not described herein again.

For example, in this embodiment of this application, only a projection scenario is used as an example for description. The data processing manner in this embodiment of this application may be further applied to another data transmission scenario. For example, the technical solutions in this embodiment of this application may be applied to an Internet access scenario of a mobile phone (or another device). That is, when the mobile phone sends data to a server, the mobile phone may also switch, based on a motion status of the mobile phone, a mode of sending data. It should be noted that, if the data sent by the mobile phone is an image frame, the processes performed on the mobile phone side in this embodiment of this application may be applied. If the data sent by the mobile phone is a non-image frame, the configuration mode of codec parameter adjustment is removed.

It may be understood that, to implement the foregoing functions, the electronic device includes corresponding hardware and/or software modules for executing the functions. In combination with example algorithm steps described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

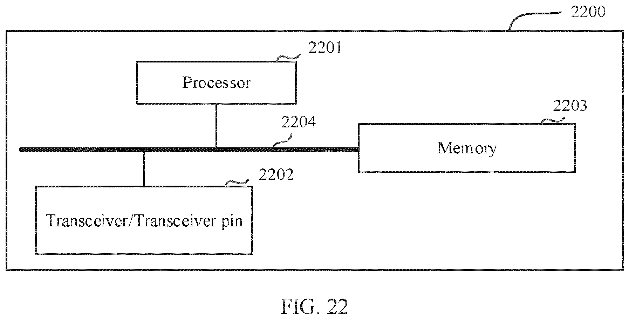

In an example, FIG. 22 is a schematic block diagram of an apparatus 2200 according to an embodiment of this application. The apparatus 2200 may include a processor 2201 and a transceiver/transceiver pin 2202, and optionally, further include a memory 2203.

Components of the apparatus 2200 are coupled together by using a bus 2204. In addition to a data bus, the bus 2204 further includes a power bus, a control bus, and a status signal bus. However, for clear description, various buses in the figure are referred to as the bus 2204.

Optionally, the memory 2203 may be used for instructions in the foregoing method embodiments. The processor 2201 may be configured to: execute the instructions in the memory 2203, control a receive pin to receive a signal, and control a transmit pin to send a signal.

The apparatus 2200 may be the electronic device or a chip of the electronic device in the foregoing method embodiments.

All related content of the steps in the foregoing method embodiments may be cited in function descriptions of the corresponding functional modules. Details are not described herein again.

This embodiment further provides a computer storage medium. The computer storage medium stores computer instructions. When the computer instructions are run on an electronic device, the electronic device is enabled to perform the data processing method in the foregoing embodiments.

This embodiment further provides a computer program product. When the computer program product runs on a computer, the computer is enabled to perform the foregoing related steps, to implement the data processing method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer executable instructions stored in the memory, to enable the chip to perform the data processing method in the foregoing method embodiments.

The electronic device, the computer storage medium, the computer program product, or the chip provided in embodiments is configured to perform the corresponding method provided above. Therefore, for beneficial effects that can be achieved, refer to the beneficial effects of the corresponding method provided above. Details are not described herein again.

Based on descriptions about the foregoing implementations, a person skilled in the art may understand that, for a purpose of convenient and brief description, division into the foregoing function modules is used as an example for illustration. In actual application, the foregoing functions may be allocated to different function modules and implemented according to a requirement. In other words, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

Any content of embodiments of this application and any content of a same embodiment may be freely combined. Any combination of the foregoing content shall fall within the scope of this application.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, for example, a USB flash drive, a removable hard disk, a read only memory (read only memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection scope of this application.

Methods or algorithm steps described in combination with the content disclosed in embodiments of this application may be implemented by hardware, or may be implemented by a processor by executing a software instruction. The software instruction may include a corresponding software module. The software module may be stored in a random access memory (Random Access Memory, RAM), a flash memory, a read only memory (Read Only Memory, ROM), an erasable programmable read only memory (Erasable Programmable ROM, EPROM), an electrically erasable programmable read only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection scope of this application.

## Claims

1. A data processing method, comprising:
establishing, by a first electronic device, a wireless connection with a second electronic device, and performing data exchange with the second electronic device through the wireless connection;
detecting, by the first electronic device, a status of the first electronic device, wherein the status of the first electronic device is a moving state or a static state;
determining, by the first electronic device, a target configuration parameter based on the status of the first electronic device, wherein the target configuration parameter comprises a configuration parameter of the wireless connection between the first electronic device and the second electronic device, and/or an encoding and decoding policy of the first electronic device; and
performing, by the first electronic device, data exchange with the second electronic device based on the target configuration parameter.

2. The method according to claim 1, wherein the establishing, by a first electronic device, a wireless connection with a second electronic device, and performing data exchange with the second electronic device through the wireless connection comprises:
sending, by the first electronic device, a connection request message to the second electronic device in response to a received first user operation;
establishing, by the first electronic device, the wireless connection with the second electronic device in response to a received response message sent by the second electronic device; and
sending, by the first electronic device, a data packet comprising an image frame to the second electronic device through the wireless connection.

3. The method according to claim 2, wherein if the status of the first electronic device is the moving state, the configuration parameter of the wireless connection comprises at least one of the following:
a quantity of retransmissions of the data packet is N, and a multiple-input multiple-output MIMO mode is a diversity mode, wherein N is an integer greater than 0.

4. The method according to claim 3, wherein if the status of the first electronic device is the static state, the configuration parameter of the wireless connection comprises at least one of the following:
the quantity of retransmissions of the data packet is M, and the MIMO mode is a multiplexing mode, wherein
M is an integer greater than 0 and less than N.

5. The method according to claim 2, wherein if the status of the first electronic device is the moving state, the encoding and decoding policy of the first electronic device comprises at least one of the following:
a bit rate of the image frame is A1;
a resolution of the image frame is B1; and
adjusting an encoding dependency relationship of the image frame.

6. The method according to claim 5, wherein if the status of the first electronic device is the static state, the encoding and decoding policy of the first electronic device comprises at least one of the following:
the bit rate of the image frame is A2;
the resolution of the image frame is B2; and
adjusting the encoding dependency relationship of the image frame, wherein
A2 is greater than A1, and B2 is greater than B1.

7. The method according to claim 1, wherein the establishing, by a first electronic device, a wireless connection with a second electronic device, and performing data exchange with the second electronic device through the wireless connection comprises:
sending, by the first electronic device, a response message to the second electronic device in response to a received connection request message sent by the second electronic device;
establishing, by the first electronic device, the wireless connection with the second electronic device; and
receiving, by the first electronic device through the wireless connection, a data packet that comprises an image frame and that is sent by the second electronic device.

8. The method according to claim 7, wherein if the status of the first electronic device is the moving state, the configuration parameter of the wireless connection comprises:
a MIMO mode is a diversity mode.

9. The method according to claim 7, wherein if the status of the first electronic device is the static state, the configuration parameter of the wireless connection comprises:
a MIMO mode is a multiplexing mode.

10. The method according to claim 7, wherein if the status of the first electronic device is the moving state, the encoding and decoding policy of the first electronic device comprises:
setting a size of an image buffer to C1.

11. The method according to claim 10, wherein if the status of the first electronic device is the static state, the encoding and decoding policy of the first electronic device comprises:
setting the size of the image buffer to C2, wherein C2 is less than C1.

12. The method according to claim 1, wherein the method further comprises:
sending, by the first electronic device, the status of the first electronic device to the second electronic device.

13. The method according to claim 1, wherein the method further comprises:
receiving, by the first electronic device, a status of the second electronic device that is sent by the second electronic device, wherein the status of the second electronic device is a moving state or a static state; and
if the status of the second electronic device is the moving state, adjusting, by the first electronic device, a configuration parameter of the first electronic device to a target configuration parameter corresponding to the moving state.

14. A first electronic device, comprising:
a memory and a processor, wherein the memory is coupled to the processor; and
the memory stores program instructions, and when the program instructions are executed by the processor, the first electronic device is enabled to perform the following steps:
establishing a wireless connection with a second electronic device, and performing data exchange with the second electronic device through the wireless connection;
detecting a status of the first electronic device, wherein the status of the first electronic device is a moving state or a static state;
determining a target configuration parameter based on the status of the first electronic device, wherein the target configuration parameter comprises a configuration parameter of the wireless connection between the first electronic device and the second electronic device, and/or an encoding and decoding policy of the first electronic device; and
performing data exchange with the second electronic device based on the target configuration parameter.

15. The electronic device according to claim 14, wherein when the program instructions are executed by the processor, the first electronic device is enabled to perform the following steps:
sending a connection request message to the second electronic device in response to a received first user operation;
establishing the wireless connection with the second electronic device in response to a received response message sent by the second electronic device; and
sending a data packet comprising an image frame to the second electronic device through the wireless connection.

16. The electronic device according to claim 15, wherein if the status of the first electronic device is the moving state, the configuration parameter of the wireless connection comprises at least one of the following:
a quantity of retransmissions of the data packet is N, and a multiple-input multiple-output MIMO mode is a diversity mode, wherein N is an integer greater than 0.

17. The electronic device according to claim 16, wherein if the status of the first electronic device is the static state, the configuration parameter of the wireless connection comprises at least one of the following:
the quantity of retransmissions of the data packet is M, and the MIMO mode is a multiplexing mode, wherein
M is an integer greater than 0 and less than N.

18. The electronic device according to claim 15, wherein if the status of the first electronic device is the moving state, the encoding and decoding policy of the first electronic device comprises at least one of the following:
a bit rate of the image frame is A1;
a resolution of the image frame is B1; and
adjusting an encoding dependency relationship of the image frame.

19. The electronic device according to claim 18, wherein if the status of the first electronic device is the static state, the encoding and decoding policy of the first electronic device comprises at least one of the following:
the bit rate of the image frame is A2;
the resolution of the image frame is B2; and
adjusting the encoding dependency relationship of the image frame, wherein
A2 is greater than A1, and B2 is greater than B1.

20. The electronic device according to claim 14, wherein when the program instructions are executed by the processor, the first electronic device is enabled to perform the following steps:
sending a response message to the second electronic device in response to a received connection request message sent by the second electronic device;
establishing the wireless connection with the second electronic device; and
receiving, through the wireless connection, a data packet that comprises an image frame and that is sent by the second electronic device.

21. The electronic device according to claim 20, wherein if the status of the first electronic device is the moving state, the configuration parameter of the wireless connection comprises:
a MIMO mode is a diversity mode.

22. The electronic device according to claim 20, wherein if the status of the first electronic device is the static state, the configuration parameter of the wireless connection comprises:
a MIMO mode is a multiplexing mode.

23. The electronic device according to claim 20, wherein if the status of the first electronic device is the moving state, the encoding and decoding policy of the first electronic device comprises:
setting a size of an image buffer to C1.

24. The electronic device according to claim 23, wherein if the status of the first electronic device is the static state, the encoding and decoding policy of the first electronic device comprises:
setting the size of the image buffer to C2, wherein C2 is less than C1.

25. The electronic device according to claim 14, wherein when the program instructions are executed by the processor, the first electronic device is enabled to perform the following step:
sending the status of the first electronic device to the second electronic device.

26. The electronic device according to claim 14, wherein when the program instructions are executed by the processor, the first electronic device is enabled to perform the following steps:
receiving a status of the second electronic device that is sent by the second electronic device, wherein the status of the second electronic device is a moving state or a static state; and
if the status of the second electronic device is the moving state, adjusting a configuration parameter of the first electronic device to a target configuration parameter corresponding to the moving state.

27. A computer-readable storage medium, wherein the computer-readable storage medium stores a computer program, and when the computer program is executed by an electronic device, the method according to any one of claims 1 to 13 is performed.

28. A computer program, wherein when the computer program is executed by an electronic device, the method according to any one of claims 1 to 13 is performed.
